(19) Europäisches Patentamt
European Patent Office
Office européen des brevets

(11) EP 0 792 420 B1

(12) EUROPÄISCHE PATENTSCHRIFT

(45) Veröffentlichungstag und Bekanntmachung des Hinweises auf die Patenterteilung:
**22.07.1998 Patentblatt 1998/30**

(21) Anmeldenummer: **95903894.4**

(22) Anmeldetag: **10.01.1995**

(51) Int Cl.6: **H02P 7/00**

(86) Internationale Anmeldenummer:
**PCT/IB95/00020**

(87) Internationale Veröffentlichungsnummer:
**WO 96/17180 (06.06.1996 Gazette 1996/26)**

(54) **VERFAHREN ZUR KOMPENSATION VON PERIODISCHEN RÜTTELKRÄFTEN IN EINER ELEKTRISCHEN DREHFELDMASCHINE**

METHOD OF COMPENSATING FOR PERIODIC VIBRATION FORCES IN AN ELECTRICAL INDUCTION MACHINE

PROCEDE DE COMPENSATION DE FORCES VIBRATOIRES PERIODIQUES DANS UN GENERATEUR A INDUCTION ELECTRIQUE

(84) Benannte Vertragsstaaten:
**CH DE GB LI**

(30) Priorität: **02.12.1994 CH 3649/94**

(43) Veröffentlichungstag der Anmeldung:
**03.09.1997 Patentblatt 1997/36**

(73) Patentinhaber:
- **Sulzer Electronics AG**
**8409 Winterthur (CH)**
- **LUST ANTRIEBSTECHNIK GmbH**
**D-35633 Lahnau (DE)**

(72) Erfinder: **SCHÖB, Reto**
**CH-8604 Volketswil (CH)**

(74) Vertreter: **Heubeck, Bernhard**
**Sulzer Management AG,**
**KS Patente/0007,**
**Zürcherstrasse 12**
**8401 Winterthur (CH)**

(56) Entgegenhaltungen:
**DE-A- 2 656 469**
**DE-U- 9 112 183**
**FR-A- 2 689 583**
**US-A- 4 841 204**
**US-A- 5 084 643**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Kompensation von periodischen Rüttelkräften in einer elektrischen Drehfeldmaschine mit einer Spezialwicklung zur kombinierten Erzeugung eines Drehmomentes und einer Querkraft in derselben, wobei die Querkraft F senkrecht auf den Rotor wirkt und in Betrag und Richtung beliebig eingestellt werden kann und wobei

- die Ständerwicklung eine Antriebswicklung mit der Polpaarzahl p, und eine Steuerwicklung mit der Polpaarzahl ($p_2 = p_1 \pm 1$), umfasst,
- die Steuerwicklung mit einem Steuerstrom $i_{S2}$ unabhängig vom Antriebsstrom $i_{S1}$ der Antriebswicklung gespeist wird,
- das in der $p_1$-Ebene dargestellte Argument des Antriebsflusses $\gamma_S^{(p_1)}$ bestimmt wird,
- der für eine gewünschte Querkraft F* notwendige, in der $p_2$-Ebene betrachtete Steuerstrom $i_{S2}^{*(T,p_2)}$ in einem mit dem Winkel $\gamma_S^{(p_1)}$ umlaufenden Koordinatensystem (T) bestimmt wird,
- dieser Steuerstrom $i_{S2}^{*(T,p_2)}$ durch eine Koordinatendrehung um den Winkel $\rho^{(p_2)} = \rho_0^{(p_2)} + \gamma_S^{(p_1)}$ in ein ständerfestes Koordinatensystem (S) transformiert wird,

und wobei durch den konstanten Winkel $\rho_0^{(p_2)}$ eine allfällige Verdrehung der Steuerwicklung und der Antriebswicklung im Ständer berücksichtigt wird.

Im schweizerischen Patentgesuch **Nr. 00 056/94-7** ist ein Verfahren zur unabhängigen Steuerung des Drehmoments und einer auf den Rotor wirkenden Querkraft F in einer Drehfeldmaschine mit einer $p_1$-polpaarigen und einer ($p_2 = p_1 \pm 1$)-polpaarigen Wicklung beschrieben. Dieses Steuerverfahren berücksichtigt alle in einer idealisierten Maschine (ohne Berücksichtigung der Nutoberwellen und Wicklungsoberwellen, von geometrischen und elektrischen Asymmetrien im Flusskreis, der Anisotropie des magnetischen Zugs, der Materialsättigung sowie der auf den Rotor wirkenden Unwuchtkräfte) auftretenden Querkräfte, und erlaubt für jeden Betriebszustand einer idealisierten Maschine die exakte Steuerung des Querkraftvektors.

Beim Betrieb an einer realen Maschine treten aufgrund der oben genannten Nichtidealitäten der Maschine Abweichungen zwischen der gewünschten Querkraft und der real auf den Rotor wirkenden Querkraft auf. Insbesondere wirken auf den Rotor periodische Rüttelkräfte die ihre Ursache in den oben genannten Nichtidealitäten der Maschine haben, was sich bei den bis jetzt bekannten Steuerverfahren als nachteilig erweist.

Es ist daher Aufgabe der Erfindung, die Abweichungen zwischen der gewünschten Querkraft und der real auf den Rotor wirkenden Querkraft, insbesondere die periodisch auftretenden Rüttelkräfte durch zusätzliche Steuereingriffe zu kompensieren und damit die Nachteile des Standes der Technik zu vermeiden.
Diese Aufgabe wird bei einem Steuerverfahren der eingangs genannten Art durch die kennzeichnenden Merkmale des **Anspruchs 1** gelöst.

Durch eine vom Flusswinkel, vom mechanischen Rotorwinkel, von der Flusswinkelgeschwindigkeit und von der mechanischen Rotorwinkelgeschwindigkeit abhängige Vorsteuerung, die auf die Sollkraft (am Eingang des Steuerverfahrens) oder auf den Steuerstrom wirkt, werden die oben genannten periodischen Rüttelkräfte kompensiert. Durch eine vom Flussvektor abhängige Drehstreckung des Steuerstromvektors werden zudem lineare und nichtlineare Fehler in der Steuerung des Querkraftvektors, wie sie aufgrund von Nut- und Wicklungsoberwellen und der Materialsättigung zustande kommen kompensiert.

Es werden also systeminhärente, periodische und damit vorhersehbare "Störkräfte", durch das Aufschalten entsprechender in der Gegenrichtung wirkender magnetischer Kräfte kompensiert. Die Aufschaltung des Korrektursignals kann am Kraftsteuereingang des Steuerstromberechnungsblocks als Vorsteuerkraft, am Ausgang des Steuerstromberechnungsblocks als Vorsteuerstrom in Ständerkoordinaten oder innerhalb des Steuerstromberechnungsblocks, vor der Drehtransformation als Vorsteuerstrom in dem mit dem Antriebsfluss umlaufenden Koordinatensystem erfolgen.

Da nun die periodischen Rüttelkräfte verschiedene Ursachen haben können, ist ein Teil dieser Rüttelkräfte mit dem geometrischen Antriebsflusswinkel periodisch verknüpft und ein anderer Teil mit dem mechanischen Rotorwinkel periodisch verknüpft. Ist der geometrische Antriebsflusswinkel seinerseits starr mit dem mechanischen Rotorwinkel gekoppelt, was für Synchronmaschinen (wozu ebenfalls Reluktanz- und Schrittmotoren zu rechnen sind) der Fall ist, so fällt die Periodizität der zuvor genannten Rüttelkraftanteile zusammen. Sie können somit gemeinsam durch ein einziges, mit dem mechanischen Rotorwinkel oder dem (allenfalls phasenverschobenen) geometrischen Antriebsflusswinkel verknüpftes Vorsteuersignal korrigiert werden. Ist der geometrische Antriebsflusswinkel jedoch nicht starr mit dem mechanischen Rotorwinkel gekoppelt, was für Induktionsmaschinen der Fall ist, so müssen die mit dem geometrischen Antriebsflusswinkel verknüpften Rüttelkräfte und die mit dem mechanischen Rotorwinkel verknüpften Rüttelkräfte durch getrennte Vorsteuersignale kompensiert werden.

Es wäre nun denkbar, die periodischen Rüttelkräfte rechnerisch aufgrund der Abweichungen eines mit den genannten Nichtidealitäten ergänzten Modells für die Querkraftbildung von dem im schweizerischen **Patentgesuch Nr.**

**00 056/94-7** beschriebenen idealen Modell zu bestimmen und anschliessend die zur Kompensation dieser Rüttelkräfte notwendigen Vorsteuersignale zu ermitteln. Dies ist allerdings nur möglich mit Nichtidealitäten, die bekannt sind (Nutung, Wicklungsoberwellen, ev. Materialsättigung). Viele Nichtidealitäten wie geometrische oder elektrische Asymmetrien, oder Unwuchten sind hingegen durch Fertigungstoleranzen bedingt und sind daher nicht im voraus bekannt.

Einem weiterführenden Erfindungsgedanken entspricht die Idee, die Rüttelkräfte in einem Messlauf für jeden Querkraftmotor individuell durch direkte Messung oder aus anderen Messgrössen wie beispielsweise der Rotorposition zu bestimmen. Da ein Teil der Rüttelkräfte (beispielsweise Unwuchtkräfte) von der Drehzahl abhängig sind, ist es notwendig die Messungen für verschiedene Drehzahlen durchzuführen. Ebenso ist es bei variablem Antriebsfluss (z.B. Beim Betrieb im Feldschwächungsbereich) notwendig, die Messungen für verschiedene Antriebsflussbeträge durchzuführen. Durch eine Mittelung über mehrere Umdrehungen können alle nicht mit dem Messwinkel korrelierte Störungen aus dem Messsignal herausgefiltert werden. Ein Teil der Rüttelkräfte ist nicht geschwindigkeitsabhängig. Für den Fall, dass der Maschine ein Querkraftregler oder ein Positionsregler mit Integralanteil überlagert ist. können in einem Messlauf bei sehr kleiner Antriebsflusswinkelgeschwindigkeit die Reglersignale für einen Umlauf oder gemittelt über mehrere Umläufe über dem geometrischen Antriebsflusswinkel aufgezeichnet werden und anschliessend im Betrieb als Vorsteuersignal verwendet werden.

Nachfolgend wird die Erfindung anhand von Ausführungsbeispielen im Zusammenhang mit den Zeichnungen näher erläutert.

Es zeigen:

**Fig. 1** Den Signalflussplan des Kems eines im schweizerischen Patentgesuch **Nr. 00 056/94-7** näher beschriebenen Verfahrens zur unabhängigen Steuerung des Drehmoments und einer auf den Rotor wirkenden Querkraft in einer Drehfeldmaschine mit einer $p_1$-polpaarigen und einer ($p_2 = p_1 \pm 1$)-polpaarigen Wicklung. Dargestellt ist hier der einfachste Fall (konstanten Flussbetrags ohne Berücksichtigung der Lorentzstörkräfte) bei dem der Steuerstrom $\underline{i}_{S2}^{*(T,p_2)}$ direkt proportional zum gewünschten Kraftvektor $\underline{F}^*$ ist.

**Fig. 2** Die möglichen Einspeisepunkte für Vorsteuersignale zur Kompensation von periodischen Rüttelkräften im Signalflussplan des Steuerverfahrens.

**Fig. 3** Vorsteuerung auf den Kraftsteuereingang ($\underline{F}^*$) mit der Vorsteuerkraft $\underline{F}'$ für den Fall, dass der geometrische Antriebsflusswinkel starr mit dem mechanischen Rotorwinkel gekoppelt ist (Synchronmaschine).

**Fig.4** Vorsteuerung auf den Steuerstrom $\underline{i}_{S2}^{*(T,p_2)}$ im mit dem Antriebsfluss umlaufenden Koordinatensystem (T) mit dem Vorsteuerstrom $\underline{i}_{S2}^{'(T,p_2)}$ für den Fall, dass der geometrische Antriebsflusswinkel starr mit dem mechanischen Rotorwinkel gekoppelt ist (Synchronmaschine).

**Fig. 5** Vorsteuerung auf den Steuerstrom $\underline{i}_{S2}^{*(T,p_2)}$ im Ständerkoordinatensystem (S) mit dem Vorsteuerstrom $\underline{i}_{S2}^{'(T,p_2)}$ für den Fall, dass der geometrische Antriebsflusswinkel starr mit dem mechanischen Rotorwinkel gekoppelt ist (Synchronmaschine).

**Fig. 6** Vorsteuerung auf den Kraftsteuereingang ($\underline{F}^*$) mit der an den geometrischen Antriebsflusswinkel gekoppelten Vorsteuerkraft $\underline{F}'''$ und der an den mechanischen Rotorwinkel gekoppelten Vorsteuerkraft $\underline{F}''$ für den Fall, dass der geometrische Antriebsflusswinkel nicht starr mit dem mechanischen Rotorwinkel gekoppelt ist (Induktionsmaschine).

**Fig.7** Vorsteuerung auf den Steuerstrom $\underline{i}_{S2}^{*(T,p_2)}$ im mit dem Antriebsfluss umlaufenden Koordinatensystem (T) mit dem an den geometrischen Antriebsflusswinkel gekoppelten Vorsteuerstrom $\underline{i}_{S2}^{'''(T,p_2)}$ und dem an den mechanischen Rotorwinkel gekoppelten Vorsteuerstrom $\underline{i}_{S2}^{''(T,p_2)}$ für den Fall, dass der geometrische Antriebsflusswinkel nicht starr mit dem mechanischen Rotorwinkel gekoppelt ist (Induktionsmaschine).

**Fig. 8** Vorsteuerung auf den Steuerstrom $\underline{i}_{S2}^{*(T,p_2)}$ im Ständerkoordinatensystem (S) mit dem an den geometrischen Antriebsflusswinkel gekoppelten Vorsteuerstrom $\underline{i}_{S2}^{'''(T,p_2)}$ und dem an den mechanischen Rotorwinkel gekoppelten Vorsteuerstrom $\underline{i}_{S2}^{''(T,p_2)}$ für den Fall, dass der geometrische Antriebsflusswinkel nicht starr mit dem mechanischen Rotorwinkel gekoppelt ist (Induktionsmaschine).

(Die verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.)

Im schweizerischen Patentgesuch **Nr. 00 056/94-7** wird -wie schon vorangehend beschriebenein Verfahren zur unabhängigen Steuerung des Drehmoments und einer auf den Rotor wirkenden Querkraft in einer Drehfeldmaschine

mit einer $p_1$-polpaarigen und einer ($p_2 = p_1 \pm 1$)-polpaarigen Wicklung offenbart.

Der Kern dieses Steuerverfahrens ist in **Figur 1** dargestellt. In einem ersten Schritt wird der für eine gewünschte Kraftwirkung notwendige Steuerstrom, der in der Figur durch die Vektorkomponenten $i_{S2d}^{*(T,p_2)}$ und $i_{S2q}^{*(T,p_2)}$ dargestellt ist, in einem mit dem Flussvektor umlaufenden und zusätzlich um einen festen Winkel gedrehten Koordinatensystem (T), bestimmt. In einem zweiten Schritt wird der so berechnete Steuerstromsollvektor durch Drehung um den Winkel $\rho^{(p_2)}$ ins Statorkoordinatensystem transformiert (17). Der Transformationswinkel $\rho^{(p_2)} = \rho_0^{(p_2)} + \gamma_S^{(p_1)}$ wird laufend aus dem im Statorkoordinatensystem, in der $p_1$-Ebene gemessenen Argument des Flussvektors $\gamma_S^{(p_1)}$ und einem festen Drehwinkel $\rho_0^{(p_2)}$ der die Verdrehung der beiden Wicklungssysteme zu einander und gegenüber der geometrischen x-Achse berücksichtigt, gebildet. Der konstante Anteil des Drehwinkels, $\rho_0^{(p_2)}$ ist durch die Beziehung $\rho_0^{(p_2)} = \alpha_0 + \frac{p_2}{p_1}\alpha_{1,2}$ definiert, wobei $\alpha_0$ einer allfälligen Verdrehung der d-Achse der Antriebswicklung gegenüber der x-Achse des geometrischen Koordinatensystems und $\alpha_{1,2}$ einer allfälligen Verdrehung der d-Achsen von Antriebs- und Steuerwicklung untereinander entspricht. Die Bestimmung des Steuerstroms im Koordinatensystem (T). aufgrund der gewünschten Querkraft ist auf vielfältige Weise denkbar. Verschiedene Möglichkeiten zur Ermittlung der Steuerströme im Koordinatensystem (T) (konstanter Flussbetrag ohne Berücksichtigung der Lorentzstörkräfte, variabler Flussbetrag ohne Berücksichtigung der Lorentzstörkräfte und variabler Flussbetrag mit Berücksichtigung der Lorentzstörkräfte) sind im Hauptpatent dargestellt. Das Steuerverfahren geht von einer idealen Maschine aus. Die Voraussetzungen hierfür sind: sinusförmige Antriebs- und Steuerflussverteilung, konstante Permeabilität des Eisens, geometrische und elektrische Symmetrie im Flusskreis, Isotropie des magnetischen Zugs und keine Unwuchtkräfte. In der realen Maschine treten die folgenden Abweichungen vom idealen Modell auf: Nut- und Wicklungsoberwellen, geometrische und elektrische Asymmetrien im Flusskreis, eine Anisotropie des magnetischen Zugs bei einer Auslenkung des Rotors aus dem Zentrum, Materialsättigung und Unwuchten. Diese Nichtidealitäten der Maschine führen zu Abweichungen zwischen der gewünschten Querkraft und der real auf den Rotor wirkenden Querkraft insbesondere zu periodischen Rüttelkräfte. Durch die Einspeisung von ebenfalls periodischen Korrektursignalen im besagten Steuerverfahren sollen diese Rüttelkräfte kompensiert werden.

Wie in **Figur 2** gezeigt wird, kann die Einspeisung der Korrektursignale an den folgenden Punkten erfolgen: am Kraftsteuereingang ($\underline{F}^*$ mit den Komponenten $F_x^*$ und $F_y^*$) des Steuerstromberechnungsblocks (10) als Vorsteuerkraft $\underline{F}'$ mit den Vektorkomponenten $F_x'$ und $F_y'$, am Ausgang des Steuerstromberechnungsblocks (10) als Vorsteuerstrom $\underline{i}_{S2}^{'(S,p_2)}$ mit den Vektorkomponenten $i_{S2d}^{'(S,p_2)}$ und $i_{S2q}^{'(S,p_2)}$ in Ständerkoordinaten oder innerhalb des Steuerstromberechnungsblocks (10), vor der Drehtransformation als Vorsteuerstrom $\underline{i}_{S2}^{'(T,p_2)}$ mit den Vektorkomponenten $i_{S2q}^{'(T,p_2)}$ und $i_{S2d}^{'(T,p_2)}$ in dem mit dem Antriebsfluss umlaufenden Koordinatensystem (T).

Je nach Ursache sind die Rüttelkräfte mit dem Antriebsflusswinkel beziehungsweise einem Mehrfachen davon oder mit dem mechanischen Rotorwinkel verknüpft. Zu den ersteren gehören alle Kräfte die aufgrund von Nichtidealitäten in der Antriebs- und Steuerflussverteilung zu stand kommen. Ursachen hierfür sind insbesondere: Nut- und Wicklungsoberwellen mit Paarungen von der Form (p+k)± (siehe hierzu "Die Wicklungen elektrischer Maschinen" von Th. Bödefeld und H. Sequenz, Springer-Verlag Wien, 1962), geometrische und elektrische Asymmetrien, Feldverzerrungen aufgrund der Materialsättigung und die Anisotropie der magnetischen Zugkraft im Falle einer Verschiebung des Rotors aus dem Zentrum, die insbesondere für den Fall einer zweipoligen Antriebsflussverteilung besonders stark wird (siehe hierzu "Finite Element Analysis of the Magnetic Forces Acting on an Eccentric Rotor of a High-Speed Induction Motor" von A. Arkkio und O. Lindgren, Proceedings of the Fourth International Symposium on Magnetic Bearings, ETH Zurich. August 1994). Zu den zweiteren gehören vor allem Unwuchtkräfte.

Ist der geometrische Antriebsflusswinkel starr mit dem mechanischen Rotorwinkel gekoppelt, was für Synchronmaschinen (wozu ebenfalls Reluktanz- und Schrittmotoren zu rechnen sind) der Fall ist, so fällt die Periodizität der genannten Rüttelkraftanteile zusammen. Sie können somit gemeinsam durch ein einziges, mit dem mechanischen Rotorwinkel oder dem (allenfalls phasenverschobenen) geometrischen Antriebsflusswinkel verknüpftes Vorsteuersignal korrigiert werden.

Das Signalflussdiagramm für eine solche Kompensation ist in **Figur 3** für eine Vorsteuerung auf den Kraftsteuereingang ($\underline{F}^*$) mit der Vorsteuerkraft $\underline{F}'$, in **Figur 4** für eine Vorsteuerung auf den Steuerstrom $\underline{i}_{S2}^{*(T,p_2)}$ im mit dem Antriebsfluss umlaufenden Koordinatensystem (T) mit dem Vorsteuerstrom $\underline{i}_{S2}^{*(T,p_2)}$ und in **Figur 5** für eine Vorsteuerung auf den Steuerstrom $\underline{i}_{S2}^{*(S,p_2)}$ im Ständerkoordinatensystem (S) mit dem Vorsteuerstrom $\underline{i}_{S2}^{'(S,p_2)}$ dargestellt. Da die Rüttelkräfte mit der Drehzahl variieren, müssen die Vorsteuersignale ebenfalls an die Drehzahl angepasst werden. Die Vorsteuerkraft und die Vorsteuerströme sind im oben genannten Fall somit Funktionen des mechanischen Rotorwinkels und der mechanischen Rotorwinkelfrequenz. Es gilt:

$$\underline{F}' = \begin{pmatrix} F_x' \\ F_y' \end{pmatrix}$$

mit $F'_x = f(\gamma_m, \omega_m)$ und $F'_y = f(\gamma_m, \omega_m)$,

$$\underline{i}_{S2}^{'(T,p_2)} = \begin{pmatrix} i_{S2d}^{'(T,p_2)} \\ i_{S2q}^{'(T,p_2)} \end{pmatrix}$$

mit $i_{S2d}^{*(T,p_2)} = f(\gamma_m, \omega_m)$ und $i_{S2q}^{'(T,p_2)} = f(\gamma_m, \omega_m)$ und

$$\underline{i}_{S2}^{'(S,p_2)} = \begin{pmatrix} i_{S2d}^{'(S,p_2)} \\ i_{S2q}^{'(S,p_2)} \end{pmatrix}$$

mit $i_{S2d}^{'(S,p_2)} = f(\gamma_m, \omega_m)$ und $i_{S2q}^{'(S,p_2)} = f(\gamma_m, \omega_m)$.

Ist der geometrische Antriebsflusswinkel nicht starr mit dem mechanischen Rotorwinkel gekoppelt, was für Induktionsmaschinen der Fall ist, so müssen die mit dem geometrischen Antriebsflusswinkel verknüpften Rüttelkräfte und die mit dem mechanischen Rotorwinkel verknüpften Rüttelkräfte durch getrennte Vorsteuersignale kompensiert werden. Das Signalflussdiagramm für eine solche Kompensation ist in **Figur 6** für eine Vorsteuerung auf den Kraftsteuereingang ($\underline{F}^*$) dargestellt. Es ist sowohl eine mit dem geometrischen Antriebsflusswinkel gekoppelte Vorsteuerkraft

$$\underline{F}''' = \begin{pmatrix} F_x''' \\ F_y''' \end{pmatrix}$$

mit den Vektorkomponenten $F_x''' = f(\gamma_s, \omega_s)$ und $F_y''' = f(\gamma_s, \omega_s)$ als auch eine mit dem mechanischen Rotorwinkel gekoppelte Vorsteuerkraft

$$\underline{F}'' = \begin{pmatrix} F_x'' \\ F_y'' \end{pmatrix}$$

mit den Vektorkomponenten $F_x'' = f(\gamma_m, \omega_m)$ und $F_y'' = f(\gamma_m, \omega_m)$ notwendig um Rüttelkräfte verschiedener Ursache zu kompensieren. **Figur 7** zeigt den selben Fall für eine Vorsteuerung auf den Steuerstrom $\underline{i}_{S2}^{*(T,p_2)}$ im mit dem Antriebsfluss umlaufenden Koordinatensystem (T). In diesem Fall wird ein vom mechanischen Rotorwinkel und von der Rotorwinkelgeschwindigkeit abhängiger Vorsteuerstrom

$$\underline{i}_{S2}^{''(T,p_2)} = \begin{pmatrix} i_{S2d}^{''(T,p_2)} \\ i_{S2q}^{''(T,p_2)} \end{pmatrix}$$

mit den Vektorkomponenten $i_{S2d}^{''(T,p_2)} = f(\gamma_m, \omega_m)$ und $i_{S2q}^{''(T,p_2)} = f(\gamma_m, \omega_m)$ aufgeschaltet um die mit dem mechanischen Rotorwinkel verknüpften Rüttelkräfte zu kompensieren und ein vom geometrischen Antriebsflusswinkel und von der Antriebsflusswinkelgeschwindigkeit abhängiger Vorsteuerstrom

$$\underline{i}_{S2}^{'''(T,p_2)} = \begin{pmatrix} i_{S2d}^{'''(T,p_2)} \\ i_{S2q}^{'''(T,p_2)} \end{pmatrix}$$

mit den Vektorkomponenten $i_{S2d}^{'''(T,p_2)} = f(\gamma_s, \omega_s)$ und $i_{S2q}^{'''(T,p_2)} = f(\gamma_s, \omega_s)$ aufgeschaltet um periodische mit dem geometrischen Antriebsflusswinkel verknüpfte Rüttelkräfte zu kompensieren. **Figur 8** zeigt den Fall einer Vorsteuerung auf den Steuerstrom $\underline{i}_{S2}^{*(S,p_2)}$ im Ständerkoordinatensystem (S). Sie wird analog der oben genannten Kompensation im Ständerkoordinatensystem (S) anstatt im mit dem Antriebsfluss umlaufenden Koordinatensystem (T) durchgeführt.

Das Hauptproblem in der Realisierung der beschriebenen Kompensation von periodischen Rüttelkräften besteht nun in der Ermittlung der hierzu notwendigen Vorsteuersignale. Bei genauer Kenntnis aller Nichtidealitäten welche zu den Rüttelkräften führen, wäre es prinzipiell denkbar, diese rechnerisch zu ermitteln. Leider sind viele der oben genannten Nichtidealitäten nicht im voraus bekannt. Anstatt diese Nichtidealitäten für jeden Querkraftmotor individuell (messtechnisch) zu bestimmen. ist es einfacher direkt die Rüttelkräfte zu ermitteln. Dies ist in jedem Fall durch direkte Messung der (über ein Lager) auf den Rotor wirkenden Kräfte in einem Messtand möglich. Viel einfacher geht dies natürlich, in Applikationen bei denen Sensoren für eine Querkraftregelung im System vorhanden sind. Häufiger dürften allerdings Anwendungen mit einer Rotorpositionsregelung sein wie beispielsweise alle Anwendungen des lagerlosen Elektromotors mit freischwebendem, positionsgeregeltem Rotor. Hier ist es möglich, die Rüttelkräfte auf aufgrund der regeltechnisch eingestellten Lagersteifigkeit und der Rotorauslenkung zu bestimmen. Da ein Teil der Rüttelkräfte (beispielsweise Unwuchtkräfte) von der Drehzahl abhängig ist, ist es notwendig, die Messungen für verschiedene Drehzahlen durchzuführen. Durch eine Mittelung über mehrere Umdrehungen können alle nicht mit dem Messwinkel korrelierte Störungen aus dem Messsignal herausgefiltert werden. Durch diese Massnahme ist es auch möglich, für den Fall der Induktionsmaschinen, die mit dem mechanischen Rotorwinkel verknüpften Rüttelkräfte von den mit dem Antriebsflusswinkel verknüpften Rüttelkräften zu trennen. Da die mechanische Rotorwinkelfrequenz und die Antriebsflusswinkelfrequenz bei der Induktionsmaschine sehr nahe beieinander liegen, ist eine Mittelung über sehr viele Umdrehungen notwendig um eine gute Trennung zu erhalten. In der Praxis sind für eine Drehzahl mehrere tausend Umläufe notwendig. Dadurch kann der Messlauf sehr zeitraubend werden. Da die mit dem mechanischen Rotorwinkel verknüpften Rüttelkräfte durch eine mit der mechanischen Rotorfrequenz umlaufende Unwuchtkraft dominiert werden, ist es möglich, durch ein auf die mechanische Rotorfrequenz abgestimmtes, schmalbandigs Filter, diese Unwuchtkraft von den mit dem Antriebsflusswinkel verknüpften Rüttelkräften zu trennen. Die nach obgenannte Methode ermittelten Rüttelkräfte werden als Stützwerte einer zweidimensionalen Funktionstabelle (als Funktion des mechanischen Rotorwinkels und der mechanischen Rotorwinkelgschwindigkeit oder als Funktion des Antriebsflusswinkels und der Antriebsflusswinkelgeschwindigkeit) in einem Speicherchip abgelegt. Hierfür eignen sich vor allem beschreibbare, nichtflüchtige Speicher wie NOVRAMs und EPROMs, insbesondere Flash -EPROMs, EEPROMs. Um einerseits den notwendigen Speicherbedarf klein zu halten und andererseits den Zeitbedarf für den Messlauf zu beschränken, werden nur eine beschränkte Anzahl von Stützwerten abgespeichert. In der Praxis reichen 128 Winkelwerte bei ca. 10 verschiedenen Winkelgeschwindigkeiten, also 2560 Stützwerte (für die Darstellung beider Vektorkomponenten) für den Fall der Synchronmaschine und 5120 Stützwerte für den Fall der Induktionsmaschine.

Zur Ausführungszeit muss immer der aktuelle Antriebsflusswinkel, die Antriebsflusswinkelgeschwindigkeit, und/oder der mechanische Rotorwinkel und die Rotorwinkelgeschwindigkeit bekannt sein. Abhängig von diesen Parametern werden für jeden Winkelwert die Stützwerte der beiden am nächsten liegenden Geschwindigkeiten ausgelesen. Der aktuelle Werte des Rüttelkraftvektors (getrennt nach Abhängigkeit vom Antriebsflusswinkel und vom mechanischen Rotorwinkel) wird dann Komponentenweise durch Interpolation zwischen den Stützwerten ermittelt. Mit Kenntnis des Rüttelkraftvektors (getrennt nach Abhängigkeit vom Antriebsflusswinkel und vom mechanischen Rotorwinkel) werden hiernach die zur Kompensation notwendigen Vorsteuersignale berechnet. Für den Fall der Kraftvorsteuerung kann der Rüttelkraftvektor (getrennt nach Abhängigkeit vom Antriebsflusswinkel und vom mechanischen Rotorwinkel) direkt negativ auf den Kraftsollwert aufgeschaltet werden. Für den Fall der Stromvorsteuerung im umlaufenden Koordinatensystem (T) ist bei konstantem Betrag des Antriebsflusses zusätzlich eine Multiplikation mit einem konstanten Faktor notwendig. Für den Fall der Stromvorsteuerung im ständerfesten Koordinatensystem (S) ist zusätzlich eine Drehtransformation vom Koordinatensystem (T) ins Koordinatensystem (S) notwendig. Aufgrund dieses Zusatzaufwands macht diese Variante in der Praxis wenig Sinn. Besser ist es hier, die Berechnung der Vorsteuerströme $\underline{i}_{S2}^{'(S,p_2)}$ $(\gamma_m,\omega_m)$ beziehungsweise $\underline{i}_{S2}^{'''(S,p_2)}$ $(\gamma_s, \omega_s)$ und $\underline{i}_{S2}^{''(S,p_2)}$ $(\gamma_m,\omega_m)$ aus den entsprechenden Rüttelkräften offline, während oder anschliessend an den Messlauf durchzuführen und diese Vorsteuerströme durch Stützwerte in Tabellenform abzuspeichern. Zur Ausführungszeit (im Betrieb) werden die Vorsteuerströme dann mit Kenntnis des aktuellen mechanischen Rotorwinkels und der Rotorwinkelgeschwindigkeit (für den Fall der Synchronmaschine) und mit zusätzlicher Kenntnis des Antriebsflusswinkels und der Antriebsflusswinkelgeschwindigkeit (im Fall der Induktionsmaschine) direkt durch Interpolation zwischen zwei Stützwerten aus der Tabelle bestimmt. Analog ist eine offline Berechnung auch für die Stomvorsteuerung im umlaufenden Koordinatensystem (T) und für eine Kraftvorsteuerung möglich.

In den bisherigen Ausführungen wurde von einem konstanten Antriebsflussbetrag $\Psi$ ausgegangen. Diese Annahme ist für viele praktische Anwendungen zulässig, da der Antriebsflussbetrag nach dem im Patentgesuch **Nr. 00 056/94-7** beschriebenen Verfahren geregelt wird und diese Regelung vielfach auf einen konstanten Werte erfolgt. Wird nun aber der Flussbetrag (beispielsweise im Feldschwächbetrieb) variiert, so hat dies insbesondere auf den mit dem Antriebsflusswinkel gekoppelten Anteil der Rüttelkräfte einen Einfluss. Dieser Einfluss muss ebenfalls in der Kraftvorsteuerung berücksichtigt werden. Da der mit dem Antriebsflusswinkel gekoppelte Anteil der Rüttelkräfte sich nahezu proportional

zum Antriebsflussbetrag ändert, wird eine gute Anpassung schon dadurch erreicht, dass das mit dem Antriebsflusswinkel gekoppelte Kraftvorsteuersignal direkt proportional mit dem Antriebsflussbetrag gestreckt wird. Für eine Stromvorsteuerung ist keine Anpassung an die Antriebsflussänderung notwendig.
Eine bessere Anpassung der Vorsteuersignale an die Antriebsflussänderung wird dadurch erreicht, dass der Streckungsfaktor als Funktion des Antriebsflussbetrags angepasst wird. Die entsprechende Funktion wird im Messlauf ermittelt und mit Hilfe von Stützstellen in einer Tabelle dargestellt. Der Parameter $\Psi$ wird dabei nur bei Nenndrehzahl und bei genau einem Winkelwert variiert. Eine noch bessere Anpassung der Vorsteuersignale an die Antriebsflussänderung kann dadurch erreicht werden, dass der Betrag des Antriebsflusses $\Psi$ als zusätzlicher Parameter in eine dreidimensionale, mit dem Antriebsflusswinkel gekoppelte Vorsteuerfunktion ($\underline{F}'''(\gamma_s,\Psi,\omega_s)$, $\underline{i}_{T2}^{'''(T,p_2)}(\gamma_s,\Psi,\omega_s)$ und $\underline{i}_{S2}^{'''(S,p_2)}(\gamma_s,\Psi,\omega_s)$ eingeführt wird. Die Vorsteuerfunktionen lassen sich wie oben beschrieben in einem Messlauf über die direkte oder indirekte Messung der Rüttelkräfte ermitteln, mit dem Unterschied, dass nun zusätzlich nicht nur die Geschwindigkeit sondern auch der Antriebsflussbetrag variiert wird. Durch die beschriebene Erweiterung ist zwar eine exakte Anpassung der Vorsteuerung an den Betrag des Antriebsflusses gegeben, der notwendige Speicherbedarf für die Darstellung der dreidimensionalen Funktion steigt allerdings um ein Vielfaches. Wenn auch nur zehn Stützpunkte für die Darstellung der Abhängigkeit vom Flussbetrag gebraucht werden (was etwa das Minimum darstellt), so verzehnfacht sich der Speicherbedarf (Etwa 52'000 Stützwerte a 8 Bit). Da heute genügend grosse und kostengünstige Speicherchips zur Verfügung stehen, ist dieser Nachteil nicht allzu schwerwiegend. Der Zeitbedarf für den Messlauf (der sich ebenfalls verzehnfacht), könnte allerdings bei gewissen Anwendungen gegen die oben erwähnte Variante zur Ermittlung der Vorsteuersignale sprechen.

**Bezugszeichenliste**

| | |
|---|---|
| 1 | Antriebswicklungsgrösse (Indizes) |
| 2 | Steuerwicklungsgrösse (Indizes) |
| 3 | Drehfeldmaschine mit einer $p_1$-polpaarigen Antriebswicklung und einer ($p_2 = p_1 \pm 1$)-polpaarigen Steuerwicklung |
| 3a | Asynchronmaschine zur Querkraft- und Drehmomentbildung |
| 3b | Synchronmaschine zur Querkraft- und Drehmomentbildung |
| 4 | Steuerwicklung |
| 5 | Antriebswicklung |
| 6 | Rotor |
| 7 | Flussmesssonden |
| 9 | Steuergerät |
| 10 | Steuerstromberechnung |
| 10a | Steuerstromberechnung mit vollständiger Entkopplung |
| 10b | Steuerstromberechnung mit teilweiser Entkopplung |
| 11 | Stromspeisegerät für Steuerwicklung |
| 12 | zweite Mittel |
| 13 | Flussberechnung- und Transformation |
| 14 | Antriebsgrössen |
| 15 | erste Mittel |
| 16a | vollständige Entkopplung |
| 16b | teilweise Entkopplung |
| 17 | Koordinatentransformation ($T \rightarrow S$) |
| | |
| d | Direkt-Komponente (dq-Darstellung) |
| F | Querkraftvektor |
| $F_x$ | x-Komponente des Querkraftvektors |
| $F_y$ | y-Komponente des Querkraftvektors |
| (F) | Antriebsflussorientiertes Koordinatensystem Beispiel: $i_{S1q}^{(F,p_1)}$ bezeichnet die Quer-Komponente des Antriebsstromvektors in Antriebsflusskoordinaten in der $p_1$-Ebene dargestellt |
| $K_L$ | Lorentz-Nutzkraftraftkonstante: für Synchronmaschine $K_L = \frac{mp_1w_2}{2rw_1}$, für Asynchronmaschine $K_L = 0$ |
| $K_M$ | Maxwell-Kraftkonstante: $K_M = \frac{\pi p_1 p_2 L_2}{4lr\mu_0 w_1 w_2}$ |
| $K_S$ | Lorentz-Störkraftkonstante $K_S = \frac{mp_2w_1}{2rw_2}$ |
| $K_{Fx}$ | Kraftkonstante in x-Richtung |
| $K_{Fy}$ | Kraftkonstante in y-Richtung |

| | |
|---|---|
| $K_{Sx}$ | Störkraftkonstante in x-Richtung |
| $K_{Sy}$ | Störkraftkonstante in y-Richtung |
| $\underline{i}_{S1}^{(p_1)}$ | Antriebsstromvektor in der $p_1$-Ebene dargestellt |
| $i_{S1d}^{(p_1)}$ | Direkt-Komponente des Antriebsstromvektors in der $p_1$-Ebene dargestellt |
| $i_{S1q}^{(p_1)}$ | Quer-Komponente des Antriebsstromvektors in der $p_1$-Ebene dargestellt |
| $\underline{i}_{S2}^{(p_2)}$ | Steuerstromvektor in der $p_2$-Ebene dargestellt |
| $i_{S2d}^{(p_2)}$ | Direkt-Komponente des Steuerstromvektors in der $p_2$-Ebene dargestellt |
| $i_{S2q}^{(p_2)}$ | Quer-Komponente des Steuerstromvektors in der $p_2$-Ebene dargestellt |
| 1 | Länge des Rotors |
| $L_1$ | Hauptinduktivität der Antriebswicklung |
| $L_1$ | Hauptinduktivität der Steuerwicklung |
| m | Phasenzahl, Strangzahl |
| $m_g$ | Masse des Rotors |
| M | Drehmoment |
| $M_i$ | inneres Maschinendrehmoment |
| $M_L$ | Lastdrehmoment |
| p | Polpaarzahl |
| $p_1$ | Polpaarzahl der Antriebswicklung |
| $p_2$ | Polpaarzahl der Steuerwicklung |
| $(P_1)$ | Abbildungsebene mit der Poplaarzahl $p_1$ |
| $(P_2)$ | Abbildungsebene mit der Poplaarzahl $p_2$ |
| q | Quer-Komponente (dq-Darstellung) |
| R | Rotor |
| r | Radius des Rotors |
| S | Stator |
| (S) | Statororientiertes Koordinatensystem Beispiel: $\underline{i}_{S2}^{(S,p_2)}$ bezeichnet den Steuerstromvektor in Statorkoordinaten. in der $p_1$-Ebene dargestellt |
| (T) | mit dem Winkel p umlaufendes Koordinatensystem Beispiel: $\underline{i}_{S2}^{(T,p_2)}$ bezeichnet den Steuerstromvektor in einem mit dem Winkel $\rho^{(P_2)}$ umlaufenden Koordinatensystem, in der $p_1$-Ebene dargestellt |
| $w_1$ | Windungszahl der Antriebswicklung |
| $w_2$ | Windungszahl der Steuerwicklung |
| X,Y | Achsen des geometrischen Koorninatensystems (Indizes) |
| x,y | Auslenkung des Rotors in x,y-Richtung |
| * | Sollgrössen, Steuergrössen Beispiel: $\underline{i}_{S2}^{(S,p_2)}$ bezeichnet den Sollwert des Steuerstromvektors in Statorkoordinaten, in der $p_1$-Ebene dargestellt |
| $\alpha_0$ | Verdrehung der d-Achse der Antriebswicklung gegenüber der x-Achse des geometrischen Koordinatensystems |
| $\alpha_{1,2}$ | Verdrehung der d-Achsen von Antriebs- und Steuerwicklung |
| $\gamma_m$ | mechanischer Rotorwinkel |
| $\gamma_S^{(p_1)}$ | Argument des Antriebsflussvektors, in der $p_1$-Ebene dargestellt |
| $\mu_o$ | magnetische Feldkonstannte im Vakuum |
| $\pi$ | Kreiskonstannte |
| $\Psi_1$ | Betrag des Antriebsflusses |
| $\underline{\Psi}_1^{(p_1)}$ | Antriebsflussvektor in der $p_1$-Ebene dargestellt |
| $\rho^{(P_2)}$ | Verdrehung des zur Berechnung des Steuerstromsollvektors verwendeten Koordinatensystems (T) gegenüber dem Statorkoordinatensystem in der $p_2$-Ebene gemessen |
| $\rho_0^{(P_2)}$ | Zeitinvarianter Anteil von $\rho^{(p_2)}$ |
| $\omega_m$ | mechanische Drehfrequenz |
| $\omega_R$ | Rotor-Drehfrequenz (Schlupffrequenz) |
| ' | Vorsteuergrössen, Kompensationsgrössen Beispiel: $\underline{i}_{S2}^{'(S,p_2)}$ bezeichnet den Vorsteuerstromvektor in Statorkoordinaten, in der $p_2$-Ebene dargestellt |

| | |
|---|---|
| " | mit dem mechanischen Rotorwinkel gekoppelte Vorsteuergrössen Beispiel: $\underline{i}_{S2}^{''(S,p_2)}(\gamma_m,\omega_m)$ bezeichnet den mit dem mechanischen Rotorwinkel gekoppelten Vorsteuerstromvektor in Statorkoordinaten, in der $p_2$-Ebene dargestellt |
| "' | mit dem Antriebsflusswinkel gekoppelte Vorsteuergrössen Beispiel: $\underline{i}_{S2}^{'''(S,p_2)}(\gamma_S,\omega_S)$ bezeichnet den mit dem Antriebsflusswinkel gekoppelten Vorsteuerstromvektor in Statorkoordinaten. in der $p_2$-Ebene dargestellt |
| $\underline{F}'$ | Vorsteuerkraftvektor |
| $F'_x$ | x-Komponente des Vorsteuerkraftvektors |
| $F'_y$ | y-Komponente des Vorsteuerkraftvektors |
| $F''$ | Mit dem mechanischen Rotorwinkel gekoppelter Anteil des Vorsteuerkraftvektors |
| $F''_x$ | x-Komponente des mit dem mechanischen Rotorwinkel gekoppelten Anteils des Vorsteuerkraftvektors |
| $F''_y$ | y-Komponente des mit dem mechanischen Rotorwinkel gekoppelten Anteils des Vorsteuerkraftvektors |
| $\underline{F}'''$ | Mit dem Antriebsflusswinkel gekoppelter Anteil des Vorsteuerkraftvektors |
| $F'''_x$ | x-Komponente des mit dem Antriebsflusswinkel gekoppelten Anteils des Vorsteuerkraftvektors |
| $F'''_y$ | y-Komponente des mit dem Antriebsflusswinkel gekoppelten Anteils des Vorsteuerkraftvektors |
| $f(a,b)$ | Funktion von a und b Beispiel: $F'_x = f(\gamma_m, \omega_m)$ heisst $F'_x$ ist eine Funktion der Grössen $\gamma_m$ und $\omega_m$ |
| $\underline{i}_{S2}^{'(p_2)}$ | Vorsteuerstromvektor (Vorsteuerung auf den Ständerstrom der Steuerwicklung ($S_2$) mit der Polpaarzahl $p_2$ |
| $i_{S2d}^{'(p_2)}$ | Direkt-Komponente des Vorsteuerstromvektors |
| $i_{S2q}^{'(p_2)}$ | Quer-Komponente des Vorsteuerstromvektors |
| $\underline{i}_{S2}^{''(p_2)}$ | Mit dem mechanischen Rotorwinkel gekoppelter Anteil des Vorsteuerstromvektors (ohne Angabe des Bezugskoordinatensystems) |
| $i_{S2d}^{''(p_2)}$ | Direkt-Komponente des mit dem mechanischen Rotorwinkel gekoppelten Anteils des Vorsteuerstromvektors (ohne Angabe des Bezugskoordinatensystems) |
| $i_{S2q}^{''(p_2)}$ | Quer-Komponente des mit dem mechanischen Rotorwinkel gekoppelten Anteils des Vorsteuerstromvektors (ohne Angabe des Bezugskoordinatensystems) |
| $\underline{i}_{S2}^{'''(p_2)}$ | Mit dem Antriebsflusswinkel gekoppelter Anteil des Vorsteuerstromvektors (ohne Angabe des Bezugskoordinatensystems) |
| $i_{S2d}^{'''(p_2)}$ | Direkt-Komponente des mit dem Antriebsflusswinkel gekoppelten Anteils des Vorsteuerstromvektors (ohne Angabe des Bezugskoordinatensystems) |
| $i_{S2q}^{'''(p_2)}$ | Quer-Komponente des mit dem Antriebsflusswinkel gekoppelten Anteils des Vorsteuerstromvektors (ohne Angabe des Bezugskoordinatensystems) |
| $\gamma_m$ | mechanischer Rotorwinkel |
| $\gamma_s$ | Argument des Antriebsflussvektors (ohne Angabe des Bezugssystems) |
| $\Psi_1$ | Betrag des Antriebsflusses |
| $\omega_m$ | mechanische Rotorwinkelfrequenz (identisch mit mechanischer Drehfrequenz) |
| $\omega_s$ | Antriebsflusswinkelfrequenz |

**Patentansprüche**

1. Verfahren zur Kompensation von periodischen Rüttelkräften in einer elektrischen Drehfeldmaschine mit einer Spezialwicklung zur kombinierten Erzeugung eines Drehmomentes und einer Querkraft in derselben, wobei die Querkraft F senkrecht auf den Rotor wirkt und in Betrag und Richtung beliebig eingestellt werden kann und wobei

   - die Ständerwicklung eine Antriebswicklung mit der Polpaarzahl $p_1$ und eine Steuerwicklung mit der Polpaarzahl $p_2 = p_1 \pm 1$ umfasst,
   - die Steuerwicklung mit einem Steuerstrom $i_{S2}$ unabhängig vom Antriebsstrom $i_{S1}$ der Antriebswicklung gespeist wird,
   - das in der $p_1$-Ebene dargestellte Argument des Antriebsflusses $\gamma_s^{(p_1)}$ bestimmt wird,
   - der für eine gewünschte Querkraft F* notwendige, in der $p_2$-Ebene betrachtete Steuerstrom $i_{S2}^{*(T,p_2)}$ in einem mit dem Winkel $\gamma_s^{(p_1)}$ umlaufenden Koordinatensystem (T) bestimmt wird,
   - dieser Steuerstrom $i_{S2}^{*(T,p_2)}$ durch eine Koordinatendrehung um den Winkel $\rho^{(p2)} = \rho_0^{(p_2)} + \gamma_s^{(p_1)}$ in ein ständerfestes Koordinatensystem (S) transformiert wird. wobei durch den konstanten Winkel $\rho_0^{(p_2)}$ eine allfällige Verdrehung der Steuerwicklung und der Antriebswicklung im Ständer berücksichtigt wird,

**dadurch gekennzeichnet**, dass

- auf den Rotor wirkende Rüttelkräfte die periodisch mit dem geometrischen Antriebsflusswinkel oder dem mechanischen Rotorwinkel verknüpft sind, durch eine vom Antriebsfluss (Winkel und Betrag), sowie von der Antriebsflusswinkelgeschwindigkeit und/oder vom mechanischen Rotorwinkel sowie von der mechanischen Rotorwinkelgeschwindigkeit abhängige Vorsteuerung des Querkraftsollwertes oder des Steuerstroms kompensiert werden.

**2.** Verfahren nach Anspruch 1,
**dadurch gekennzeichnet,** dass

- die Kompensation erfolgt, indem bei einer Synchronmaschine oder einer Reluktanzmaschine zu den Komponenten $F_x^*$ und $F_y^*$ des Kraftsollwertes $\underline{F}^*$ eine vom mechanischen Rotorwinkel und von der Rotorwinkelgeschwindigkeit abhängige Vorsteuerkraft

$$\underline{F}^{'} = \begin{pmatrix} F_x^{'} \\ F_y^{'} \end{pmatrix}$$

mit den Vektorkomponenten $F_x^{'} = f(\gamma_m, \omega_m)$ und $F_y^{''} = f(\gamma_m, \omega_m)$ hinzu addiert wird.

**3.** Verfahren nach Anspruch 1,
**dadurch gekennzeichnet,** dass

- die Kompensation erfolgt, indem bei einer Induktionsmaschine zu den Komponenten $F_x^*$ und $F_y^*$ des Kraftsollwertes $\underline{F}^*$ erstens eine vom geometrischen Antriebsflusswinkel und von der Antriebsflusswinkelgeschwindigkeit abhängige Vorsteuerkraft

$$\underline{F}^{'''} = \begin{pmatrix} F_x^{'''} \\ F_y^{'''} \end{pmatrix}$$

mit den Vektorkomponenten $F_y^{'''} = f(\gamma_s, \omega_s)$ und $F_y^{'''} = f(\gamma_s, \omega_s)$ und zweitens eine vom mechanischen Rotorwinkel und von der Rotorwinkelgeschwindigkeit abhängige Vorsteuerkraft

$$\underline{F}^{''} = \begin{pmatrix} F_x^{''} \\ F_y^{''} \end{pmatrix}$$

mit den Vektorkomponenten $F_x^{''} = f(\gamma_m, \omega_m)$ und $F_y^{''} = f(\gamma_m, \omega_m)$ hinzu addiert wird.

**4.** Verfahren nach Anspruch 2,
**dadurch gekennzeichnet,** dass

- in einem Messlauf für verschiedene Drehzahlen die auf den Rotor wirkende Rüttelkraft in Abhängigkeit vom mechanischen Rotorwinkel messtechnisch oder rechnerisch aus anderen Grössen wie aus der Rotorposition bestimmt und über mehrere Perioden des mechanischen Rotorwinkels gemittelt als Funktionstabelle in Abhängigkeit von der Rotorposition und von der Drehzahl abgespeichert wird,
- anschliessend im Betrieb die Werte der Funktionstabelle abhängig vom mechanischen Rotorwinkel und von der mechanischen Drehzahl wieder ausgelesen werden. falls notwendig zwischen zwei Tabellenwerten interpoliert wird und die so erhaltene Kraft nach einem Vorzeichenwechsel als Vorsteuerkraft

$$\underline{F}' = \begin{pmatrix} F'_x \\ F'_y \end{pmatrix}$$

mit den Vektorkomponenten $F'_x = f(\gamma_m, \omega_m)$ und $F'y = f(\gamma_m, \omega_m)$ zum Kraftsollwert $\underline{F}^*$ mit den Komponenten $F^*_x$ und $F^*_y$ hinzu addiert wird.

**5.** Verfahren nach Anspruch 3,
**dadurch gekennzeichnet,** dass

- in einem Messlauf für verschiedene Antriebsflusswinkelgeschwindigkeiten die auf den Rotor wirkende Rüttelkraft in Abhängigkeit vom Antriebsflusswinkel messtechnisch oder rechnerisch aus andren Grössen wie aus der Rotorposition bestimmt und über sehr viele Perioden des geometrischen Antriebsflusswinkels gemittelt und nach einem Vorzeichenwechsel als Funktionstabelle in Abhängigkeit vom geometrischen Antriebsflusswinkel und der Antriebsflusswinkelgeschwindigkeit als Vorsteuerkraft

$$\underline{F}''' = \begin{pmatrix} F'''_x \\ F'''_y \end{pmatrix}$$

mit den Vektorkomponenten $F'''_x = f(\gamma_s, \omega s)$ und $F'''_y = f(\gamma_s, \omega_s)$ abgespeichert wird,
- im gleichen Messlauf für verschiedene Rotorwinkelgeschwindigkeiten die auf den Rotor wirkende Rüttelkraft in Abhängigkeit vom Rotorwinkel messtechnisch oder rechnerisch aus andren Grössen wie aus der Rotorposition bestimmt und über sehr viele Perioden des Rotorwinkels gemittelt und nach einem Vorzeichenwechsel als Funktionstabelle in Abhängigkeit vom Rotorwinkel und der Rotorwinkelgeschwindigkeit als Vorsteuerkraft

$$\underline{F}'' = \begin{pmatrix} F''_x \\ F''_y \end{pmatrix}$$

mit den Vektorkomponenten $F''_x = f(\gamma_m, \omega_m)$ und $F''_y = f(\gamma_m, \omega_m)$ abgespeichert wird,
- anschliessend im Betrieb die Werte der Funktionstabelle abhängig vom mechanischen Rotorwinkel, vom geometrischen Antriebsflusswinkel, von der mechanischen Drehzahl und von der Antriebsflusswinkelgeschwindigkeit wieder ausgelesen werden, falls notwendig zwischen zwei Tabellenwerten interpoliert wird und die so erhaltenen Vorsteuerkräfte $\underline{F}'''$ und $\underline{F}''$ zum Kraftsollwert $\underline{F}^*$ hinzu addiert werden.

**6.** Verfahren nach Anspruch 2,
**dadurch gekennzeichnet,** dass

- der Maschine ein Querkraftregler oder ein Positionsregler mit Integralanteil überlagert ist,
- in einem Messlauf bei sehr kleiner Antriebsflusswinkelgeschwindigkeit die Reglersignale für einen Umlauf oder gemittelt über mehrere Umläufe über dem geometrischen Antriebsflusswinkel in einer Tabelle abgespeichert werden und anschliessend im Betrieb die Tabellenwerte abhängig vom geometrischen Antriebsflusswinkel wieder ausgelesen und als Vorsteuerkraft $\underline{F}'''$ zum Kraftsollwert $\underline{F}^*$ hinzu addiert werden.

**7.** Verfahren nach Anspruch 1,
**dadurch gekennzeichnet,** dass

- die auf den Rotor einer Synchronmaschine oder einer Reluktanzmaschine wirkenden Rüttelkräfte kompensiert werden, indem zu dem im Koordinatensystem (T) als Vektor bestimmten Steuerstrom

$$\underline{i}_{S2}^{*(T,p_2)} = \begin{pmatrix} i_{S2d}^{*(T,p_2)} \\ i_{S2q}^{*(T,p_2)} \end{pmatrix}$$

ein vom mechanischen Rotorwinkel und von der Rotorwinkelgeschwindigkeit abhängiger Vorsteuerstroms

$$\underline{i}_{S2}^{'(T,p_2)} = \begin{pmatrix} i_{S2d}^{'(T,p_2)} \\ i_{S2q}^{'(T,p_2)} \end{pmatrix}$$

mit den Vektorkomponenten $i_{S2d}^{'(T,p_2)} = f(\gamma_m,\omega_m)$ und $i_{S2q}^{'(T,p_2)} = f(\gamma_m,\omega_m)$ hinzu addiert wird.

**8.** Verfahren nach Anspruch 1,
**dadurch gekennzeichnet,** dass

- die auf den Rotor einer Induktionsmaschine wirkenden Rüttelkräfte kompensiert werden, indem im Koordinatensystem (T) als Vektor bestimmten Steuerstrom

$$\underline{i}_{S2}^{*(T,p_2)} = \begin{pmatrix} i_{S2d}^{*(T,p_2)} \\ i_{S2q}^{*(T,p_2)} \end{pmatrix}$$

- erstens ein vom mechanischen Rotorwinkel und von der Rotorwinkelgeschwindigkeit abhängiger Vorsteuerstrom

$$\underline{i}_{S2}^{''(T,p_2)} = \begin{pmatrix} i_{S2d}^{''(T,p_2)} \\ i_{S2q}^{''(T,p_2)} \end{pmatrix}$$

mit den Vektorkomponenten $i_{S2d}^{''(T,p_2)} = f(\gamma_m,\omega_m)$ und $i_{S2q}^{''(T,p_2)} = f(\gamma_m,\omega_m)$ hinzu addiert wird um die mit dem mechanischen Rotorwinkel verknüpften. auf den Rotor wirkenden periodischen Rüttelkräfte zu kompensieren und
- zweitens ein vom geometrischen Antriebsflusswinkel und von der Antriebsflusswinkelgeschwindigkeit abhängiger Vorsteuerstrom

$$\underline{i}_{S2}^{'''(T,p_2)} = \begin{pmatrix} i_{S2d}^{'''(T,p_2)} \\ i_{S2q}^{'''(T,p_2)} \end{pmatrix}$$

mit den Vektorkomponenten $i_{S2d}^{'''(T,p_2)} = f(\gamma_s,\omega_s)$ und $i_{S2q}^{'''(T,p_2)} = f(\gamma_s,\omega_s)$ hinzu addiert wird um periodische mit dem geometrischen Antriebsflusswinkel verknüpfte. auf den Rotor wirkende Rüttelkräfte zu kompensieren.

**9.** Verfahren nach Anspruch 7 oder 8,
**dadurch gekennzeichnet,** dass

- die Vektorkomponenten $i_{S2d}^{'(T,p_2)} = f(\gamma_m, \omega_m)$ und $i_{S2q}^{'(T,p_2)} = f(\gamma_m, \omega_m)$ des Vorsteuerstroms

$$\underline{i}_{S2}^{'(T,p_2)} = \begin{pmatrix} i_{S2d}^{'(T,p_2)} \\ i_{S2q}^{'(T,p_2)} \end{pmatrix}$$

oder die Vektorkomponenten $i^{''(T,p_2)}_{S2d} = -f(\gamma_m,\omega_m)$ und $i^{''(T,p_2)}_{S2q} = f(\gamma_m,\omega_m)$ des Vorsteuerstroms

$$\underline{i}^{''(T,p_2)}_{S2} = \begin{pmatrix} i^{''(T,p_2)}_{S2d} \\ i^{''(T,p_2)}_{S2q} \end{pmatrix}$$

und die Vektorkomponenten $i^{'''(T,p_2)}_{S2d} = f(\gamma_s,\omega_s)$ und $i^{'''(T,p_2)}_{S2q} = f(\gamma_s,\omega_s)$ des Vorsteuerstroms

$$\underline{i}^{'''(T,p_2)}_{S2} = \begin{pmatrix} i^{'''(T,p_2)}_{S2d} \\ i^{'''(T,p_2)}_{S2q} \end{pmatrix}$$

als zweidimensionale Funktionen, durch Stützwerte dargestellt, in Tabellenform in einem Halbleiterspeicher abgelegt werden und nachfolgend

- zur Ausführungszeit (während dem Betrieb) die Vorsteuerströme $\underline{i}^{'(T,p_2)}_{S2}$ oder $\underline{i}^{''(T,p_2)}_{S2}$ und $\underline{i}^{'''(T,p_2)}_{S2}$ in Abhängigkeit vom geometrischen Antriebsflusswinkel und der Antriebsflusswinkelgeschwindigkeit beziehungsweise vom mechanischen Rotorwinkel und von der mechanischen Rotorwinkelgeschwindigkeit aus der Tabelle ausgelesen werden, wobei für Parameterwerte. die nicht als Stützwerte in der Tabelle vorhanden sind, zwischen zwei benachbarten Werten interpoliert wird und
- zum im Koordinatensystem (T) als Vektor bestimmten Steuerstrom

$$\underline{i}^{*(T,p_2)}_{S2} = \begin{pmatrix} i^{*(T,p_2)}_{S2d} \\ i^{*(T,p_2)}_{S2q} \end{pmatrix}$$

addiert werden.

**10.** Verfahren nach Anspruch 7 bis 9,
**dadurch gekennzeichnet,** dass

- bei einer Synchronmaschine und der Reluktanzmaschine in einem Messlauf für verschiedene Drehzahlen die auf den Rotor wirkende Rüttelkraft in Abhängigkeit vom mechanischen Rotorwinkel messtechnisch oder rechnerisch aus andren Grössen wie aus der Rotorposition bestimmt und über mehrere Perioden des mechanischen Rotorwinkels gemittelt als Funktionstabelle in Abhängigkeit von der Rotorposition und von der Drehzahl abgespeichert wird, und daraus anschliessend zur Ausführungszeit (während dem Betrieb) der Vorsteuerstrom

$$\underline{i}^{'(T,p_2)}_{S2} = \begin{pmatrix} i^{'(T,p_2)}_{S2d} \\ i^{'(T,p_2)}_{S2q} \end{pmatrix}$$

so berechnet wird, dass er eine der Rüttelkraft entgegengesetzte Kompensationskraft bewirkt.

**11.** Verfahren nach Anspruch 7 bis 9,
**dadurch gekennzeichnet,** dass

- bei einer Induktionsmaschine in einem Messlauf für verschiedene Antriebsflusswinkelgeschwindigkeiten die auf den Rotor wirkende Rüttelkraft in Abhängigkeit vom geometrischen Antriebsflusswinkel messtechnisch oder rechnerisch aus andren Grössen wie aus der Rotorposition bestimmt und über sehr viele Perioden des Antriebsflusswinkels gemittelt wird, und dann als Funktionstabelle in Abhängigkeit vom geometrischen Antriebsflusswinkel und der Antriebsflusswinkelgeschwindigkeit abgespeichert wird, im selben Messlauf
- für verschiedene Rotorwinkelgeschwindigkeiten die auf den Rotor wirkende Rüttelkraft in Abhängigkeit vom

mechanischen Rotorwinkel messtechnisch oder rechnerisch aus andren Grössen wie aus der Rotorposition bestimmt und über sehr viele Perioden des Rotorwinkels gemittelt und als Funktionstabelle in Abhängigkeit vom Rotorwinkel und der Rotorwinkelgeschwindigkeit abgespeichert wird,

- zur Ausführungszeit (während dem Betrieb) aus den beiden Funktionstabellen durch Interpolation zwischen den Stützwerten und Vorzeichenwechsel der mit dem Antriebsflusswinkel verknüpfte Vorsteuerstrom

$$\underline{i}_{S2}^{'''(T,p_2)} = \begin{pmatrix} i_{S2d}^{'''(T,p_2)} \\ i_{S2q}^{'''(T,p_2)} \end{pmatrix}$$

so bestimmt wird. dass er eine dem mit dem Maschinenfluss verbundenen Anteil der Rüttelkraft entgegengesetzte Kompensationskraft bewirkt und der mit dem mechanischen Rotorwinkel verknüpfte Vorsteuerstrom

$$\underline{i}_{S2}^{''(T,p_2)} = \begin{pmatrix} i_{S2d}^{''(T,p_2)} \\ i_{S2q}^{''(T,p_2)} \end{pmatrix}$$

so bestimmt wird, dass er eine dem mit dem mechanischen Rotorwinkel verbundenen Anteil der Rüttelkraft (Unwuchtkräfte) entgegengesetzte Kompensationskraft bewirkt.

**12.** Verfahren nach Anspruch 7 bis 11,
**dadurch gekennzeichnet,** dass

- die angegebenen Korrekturmassnahmen nicht in dem mit dem Winkel $\gamma_s^{(p_1)}$ umlaufenden Koordinatensystem (T) sondern im ständerfesten Koordinatensystem (S) durchgeführt werden.

**13.** Verfahren nach einem der vorangegangenen Ansprüche,
**dadurch gekennzeichnet,** dass

- bei der Ermittlung der Vorsteuersignale zusätzlich die Abhängigkeit der Rüttelkräfte vom Betrag des Antriebsflusses ($\Psi$) berücksichtigt wird.

## Claims

**1.** Method of compensating periodic shaking forces in an electrical rotating field machine having a special winding for the combined generation of a torque and a transverse force in the same, wherein the transverse force F acts perpendicular to the rotor and its magnitude and direction can be set as desired, and wherein

- the stator winding includes a drive winding with the pole pair number $p_1$ and a control winding with the pole pair number $p_2 = p_1 \pm 1$,

- the control winding is fed with a control current $i_{S2}$ independently of the drive current $i_{S1}$ of the drive winding,

- the argument of the drive flux $\gamma_s^{(p1)}$ represented in the $p_1$ plane is determined,

- the control current $i_{S2}^{*(T,p_2)}$ considered in the $p_2$ plane necessary for a desired transverse force F* is determined in a coordinate system (T) rotating with the angle $\gamma_s(p_1)$,

- this control current $i_{S2}^{*(T,p_2)}$ is transformed by a coordinate rotation through the angle $\rho^{(P_2)} = \rho_0^{(P_2)} + \gamma_s^{(P_1)}$ into a coordinate system (S) fixed relative to the stator, with any twisting of the control winding and of the drive winding in the stator being taken into account by the constant angle $\rho_0^{(p2)}$,

**characterised in that**

- shaking forces which act on the rotor, and which are periodically linked with the geometrical drive flux angle or the mechanical rotor angle, are compensated by a pre-control of the desired value of the transverse force or of the control current dependent on the drive flux (angle and magnitude), and on the angular speed of the drive flux and/or on the mechanical rotor angle and also on the mechanical angular speed of the rotor.

**2.** Method in accordance with claim 1,
**characterised in that** the compensation takes place by adding a pre-control force

$$\underline{F}' = \begin{pmatrix} F_x' \\ F_y' \end{pmatrix}$$

with the vector components $F_x' = f(\gamma_m, \omega_m)$ and $F_y' = f(\gamma_m, \omega_m)$ dependent on the mechanical rotor angle and on the angular speed of the rotor to the components $F_x^*$ and $F_y^*$ of the desired force value $\underline{F}^*$ in a synchronous machine or in a reluctance machine.

**3.** Method in accordance with claim 1,
**characterised in that**

- the compensation takes place in that, in an induction machine, firstly a pre-control force

$$\underline{F}''' = \begin{pmatrix} F_x''' \\ F_y''' \end{pmatrix}$$

with the vector components $F_x''' = f(\gamma_s, \omega_s)$ and $F_y''' = f(\gamma_s, \omega_s)$ dependent on the geometrical drive flux angle and on the angular speed of the drive flux and, secondly, a pre-control force

$$\underline{F}'' = \begin{pmatrix} F_x'' \\ F_y'' \end{pmatrix}$$

with the vector components $F_x'' = f(\gamma_m, \omega_m)$ and $F''_y = f(\gamma_m, \omega_m)$ dependent on the mechanical rotor angle and on the angular speed of the rotor, are added to the components $F_x^*$ and $F_y^*$ of the desired force value $\underline{F}^*$.

**4.** Method in accordance with claim 2,
**characterised in that**

- the shaking force acting on the rotor is determined in a measurement run for various speeds of rotation in dependence on the mechanical rotor angle by technical measurement, or is computed from other parameters, such as from the rotor position, and is stored averaged over several periods of the mechanical rotor angle as a function table in dependence on the rotor position and on the speed of rotation,

- subsequently, in operation, the values of the function table are read out again in dependence on the mechanical rotor angle and on the mechanical speed of rotation, if necessary with interpolation between two table values, and the so obtained force is added after a change of the sign to the desired force value $\underline{F}^*$ with the components $F_x^*$ and $F_y^*$ as a pre-control force

$$\underline{F}' = \begin{pmatrix} F_x' \\ F_y' \end{pmatrix}$$

with the vector components $F_x' = f(\gamma_m, \omega_m)$ and $F_y' = f(\gamma_m, \omega_m)$ .

**5.** Method in accordance with claim 3,
**characterised in that**

- the shaking force acting on the rotor is determined in a measurement run for various angular speeds of the drive flux in dependence on the drive flux angle by technical measurement, or is computed from other parameters, such as from the rotor position, and is stored averaged over very many periods of the geometrical drive flux angle, and after a change in sign, as a function table in dependence on the geometrical drive flux angle and the angular speed of the drive flux as a pre-control force

$$\underline{F}''' = \begin{pmatrix} F_x''' \\ F_y''' \end{pmatrix}$$

with the vector components $F_x''' = f(\gamma_s, \omega_s)$ and $F_y''' = f(\gamma_s, \omega_s)$ ,

- in the same measurement run the shaking force acting on the rotor is determined for various angular speeds of the rotor in dependence on the rotor angle by technical measurement, or is computed from other parameters, such as from the rotor position, and is averaged over very many periods of the rotor angle and stored, after a change of sign, as a function table in dependence on the rotor angle and the angular speed of the rotor as a pre-control force

$$\underline{F}'' = \begin{pmatrix} F_x'' \\ F_y'' \end{pmatrix}$$

with the vector components $F_x'' = f(\gamma_m, \omega_m)$ and $F_y'' = f(\gamma_m, \omega_m)$,

- whereafter, in operation, the values of the function table are read out again in dependence on the mechanical rotor angle, on the geometrical drive flux angle, on the mechanical speed of rotation and on the angular speed of the drive flux, if necessary with interpolation between two table values, and the so obtained pre-control forces $\underline{F}'''$ and $\underline{F}''$ are added to the desired force value $\underline{F}^*$.

**6.** Method in accordance with claim 2,
**characterised in that**

- a transverse force regulating system or a position regulating system with an integral component is superimposed on the machine,

- in a measurement run, at very low angular speed of the drive flux, the regulator signals are stored in a table as a function of the geometrical drive flux angle for one rotation or averaged over several rotations, and,in operation, the table values are subsequently read out again in dependence on the geometrical drive flux angle and added as a pre-control force $\underline{F}'''$ to the desired force value $\underline{F}^*$.

**7.** Method in accordance with claim 1,
**characterised in that**

- the shaking forces acting on the rotor of a synchronous machine or of a reluctance machine are compensated in that a pre-control current

$$\underline{i}_{S2}^{'(T,p_2)} = \begin{pmatrix} i_{S2d}^{'(T,p_2)} \\ i_{S2q}^{'(T,p_2)} \end{pmatrix}$$

dependent on the mechanical rotor angle and on the angular speed of the rotor with the vector components $i_{S2d}^{'(T,p_2)} = f(\gamma_m,\omega_m)$ and $i_{S2q}^{'(T,p_2)} = f(\gamma_m,\omega_m)$ is added to the control current

$$\underline{i}_{S2}^{*(T,p_2)} = \begin{pmatrix} i_{S2d}^{*(T,p_2)} \\ i_{S2q}^{*(T,p_2)} \end{pmatrix}$$

determined as a vector in the coordinate system (T).

**8.** Method in accordance with claim 1,
**characterised in that**

- the shaking forces acting on the rotor of an induction machine are compensated in that there is added to the control current

$$\underline{i}_{S2}^{*(T,p_2)} = \begin{pmatrix} i_{S2d}^{*(T,p_2)} \\ i_{S2q}^{*(T,p_2)} \end{pmatrix}$$

determined as a vector in the coordinate system (T)

- firstly a pre-control current

$$\underline{i}_{S2}^{''(T,p_2)} = \begin{pmatrix} i_{S2d}^{''(T,p_2)} \\ i_{S2q}^{''(T,p_2)} \end{pmatrix}$$

with the vector components $\underline{i}_{S2d}^{''(T,p_2)} = f(\gamma_m,\omega_m)$ and $\underline{i}_{S2q}^{''(T,p_2)} = f(\gamma_m,\omega_m)$ dependent on the mechanical rotor angle and on the angular speed of the rotor in order to compensate the periodic shaking forces which are linked to the mechanical rotor angle and which act on the rotor, and,

- secondly, a pre-control current

$$\underline{i}_{S2}^{'''(T,p_2)} = \begin{pmatrix} i_{S2d}^{'''(T,p_2)} \\ i_{S2q}^{'''(T,p_2)} \end{pmatrix}$$

with the vector components $i_{S2q}^{'''(T,p_2)} = f(\gamma_m,\omega_m)$ and $i_{S2d}^{'''(T,p_2)} = f(\gamma_s,\omega_s)$ dependent on the geometrical drive flux angle and on the angular speed of the drive flux in order to compensate periodic shaking forces acting on the rotor which are linked with the geometrical drive flux angle.

**9.** Method in accordance with claim 7 or claim 8,
**characterised in that**

- the vector components $i_{S2d}^{'(T,p_2)} = f(\gamma_m, \omega_m)$ and $i_{S2q}^{'(T,p_2)} = f(\gamma_m, \omega_m)$ of the pre-control current

$$\underline{i}_{S2}^{'(T,p_2)} = \begin{pmatrix} i_{S2d}^{'(T,p_2)} \\ i_{S2q}^{'(T,p_2)} \end{pmatrix}$$

  or the vector components $i_{S2d}^{''(T,p_2)} = f(\gamma_m, \omega_m)$ and $i_{S2q}^{''(T,p_2)} = f(\gamma_m, \omega_m)$ of the pre-control current

$$\underline{i}_{S2}^{''(T,p_2)} = \begin{pmatrix} i_{S2d}^{''(T,p_2)} \\ i_{S2q}^{''(T,p_2)} \end{pmatrix}$$

  and the vector components $i_{S2d}^{'''(T,p_2)} = f(\gamma_s, \omega_s)$ and $i_{S2q}^{'''(T,p_2)} = f(\gamma_s, \omega_s)$ of the pre-control current

$$\underline{i}_{S2}^{'''(T,p_2)} = \begin{pmatrix} i_{S2d}^{'''(T,p_2)} \\ i_{S2q}^{'''(T,p_2)} \end{pmatrix}$$

  are stored in table form in a semiconductor memory as two-dimensional functions represented by supporting values and subsequently

- at the time of execution (during the operation), the pre-control currents $\underline{i}_{S2}^{'(T,p_2)}$ or $\underline{i}_{S2}^{''(T,p_2)}$ and $\underline{i}_{S2}^{'''(T,p_2)}$ are read out from the table in dependence on the geometrical drive flux angle and the angular speed of the drive flux, or on the mechanical rotor angle and on the angular speed of the mechanical rotor, with interpolation being carried out between two adjacent values for parameter values which are not present as supporting values in the table, and

- are added to the control current

$$\underline{i}_{S2}^{*(T,p_2)} = \begin{pmatrix} i_{S2d}^{*(T,p_2)} \\ i_{S2q}^{*(T,p_2)} \end{pmatrix}$$

  determined as a vector in the coordinate system (T).

**10.** Method in accordance with claim 7 to 9,
**characterised in that**

- in a synchronous machine and in the reluctance machine, the shaking force acting on the rotor is determined in a measurement run for various speeds of rotation in dependence on the mechanical rotor angle by technical measurement, or is computed from other parameters, such as from the rotor position, and is stored as a function table averaged over several periods of the mechanical rotor angle in dependence on the rotor position and on the speed of rotation, and in that, at the time of execution (during operation) the pre-control current

$$\underline{i}_{S2}^{'(T,p_2)} = \begin{pmatrix} i_{S2d}^{'(T,p_2)} \\ i_{S2q}^{'(T,p_2)} \end{pmatrix}$$

is subsequently so computed from this so that it brings about a compensation force opposed to the shaking force.

**11.** Method in accordance with claim 7 to 9,
**characterised in that**

- in an induction machine, the shaking force acting on the rotor is determined in a measurement run for various angular speeds of the drive flux in dependence on the geometrical drive flux angle by technical measurement, or is computed from other parameters, such as from the rotor position, and is averaged over very many periods of the drive flux angle and then stored as a function table in dependence on the geometrical drive flux angle and on the angular speed of the drive flux, in the same measurement run,

- for various angular speeds of the rotor, the shaking force acting on the rotor is determined in dependence on the mechanical rotor angle by technical measurement, or is computed from other parameters, such as from the rotor position, and averaged over very many periods of the rotor angle and stored as function table in dependence on the rotor angle and on the angular speed of the rotor,

- at the time of execution (during the operation) the pre-control current

$$\underline{i}_{S2}^{'''(T,p_2)} = \begin{pmatrix} i_{S2d}^{'''(T,p_2)} \\ i_{S2q}^{'''(T,p_2)} \end{pmatrix}$$

linked to the drive flux angle is so determined from the two function tables by interpolation between the supporting values and by change of the sign that it brings about a compensation force opposed to the component of the shaking force associated with the machine flux and the pre-control current

$$\underline{i}_{S2}^{''(T,p_2)} = \begin{pmatrix} i_{S2d}^{''(T,p_2)} \\ i_{S2q}^{''(T,p_2)} \end{pmatrix}$$

linked with the mechanical rotor angle is so determined that it brings about a compensation force opposed to the component of the shaking force (imbalance forces) associated with the mechanical rotor angle.

**12.** Method in accordance with claim 7 to 11,
**characterised in that**

- the correction measures set forth are not carried out in the coordinate system (T) rotating with the angle $\gamma_s^{(p_1)}$ but rather in the coordinate system (S) fixed relative to the stator.

**13.** Method in accordance with the preceding claims,
**characterised in that**

- in determining the pre-control signals the dependence of the shaking forces on the magnitude of the drive flux ($\Psi$) is additionally taken into account.

**Revendications**

1. Procédé de compensation de forces vibratoires périodiques dans un générateur à induction électrique avec un enroulement spécial pour la production combinée d'un couple de rotation et d'une force transversale dans celui-ci, la force transversale F agissant verticalement sur le rotor et sa valeur et direction pouvant être réglées sélectivement et où

   - l'enroulement du stator comprend un enroulement d'entraînement avec le nombre de paires de pôles $p_1$ et un enroulement de commande avec le nombre de paires de pôles $P_2 = P_1 \pm 1$,
   - l'enroulement de commande étant alimenté par un courant de commande $i_{S2}$ indépendamment du courant d'entraînement $i_{S1}$ de l'enroulement d'entraînement,
   - l'argument représenté dans le plan $p_1$ du flux d'entraînement $\gamma_s{}^{(p1)}$ est défini,
   - le courant de commande $i_{S2}{}^{*(T,p2)}$ requis pour une force transversale recherchée F*, considéré dans le plan $p_2$ est déterminé dans un système de coordonnées (T) tournant avec l'angle $\gamma_s{}^{(P_1)}$,
   - ce courant de commande $i_{S2}{}^{*(T,p2)}$ est transformé par une rotation des coordonnées suivant l'angle $\rho^{(p2)} = \rho_0{}^{(p2)} + \gamma_S{}^{(p1)}$ en un système de coordonnées (S) solidaire du stator où du fait de l'angle constant $\rho_0{}^{(p2)}$ une rotation éventuelle de l'enroulement de commande et de l'enroulement d'entraînement dans le stator est prise en considération,

   caractérisé en ce que que

   - des forces vibratoires agissant sur le rotor qui sont liées périodiquement à l'angle géométrique du flux d'entraînement ou à l'angle mécanique du rotor sont compensées par une commande pilote de la valeur de consigne de la force transversale ou du courant de commande, dépendant du flux d'entraînement (angle et quantité) ainsi que de la vitesse angulaire du flux d'entraînement et/ou de l'angle de rotor mécanique ainsi que de la vitesse d'angle de rotor mécanique.

2. Procédé selon la revendication 1, caractérisé en ce que la compensation a lieu en ajoutant dans une machine synchrone ou une machine à reluctance aux composantes $F^*_x$ , et $F^*_y$ de la valeur de consigne de force $\underline{F}^*$ une force de commande pilote

$$\underline{F}' = \begin{pmatrix} F'_x \\ F'_y \end{pmatrix}$$

   dépendant de l'angle mécanique du rotor et de la vitesse angulaire du rotor, avec les composantes de vecteur $F'_x=f(\gamma_m,\omega_m)$ et $F'_y=f(\gamma_m,\omega_m)$.

3. Procédé selon la revendication 1, caractérisé en ce que

   - la compensation a lieu en ce qu'il est ajouté dans une machine d'induction aux composantes $F^*_x$ et $F^*_y$ de la valeur de consigne de force $\underline{F}^*$ premièrement une force de commande pilote

$$\underline{F}''' = \begin{pmatrix} F'''_x \\ F'''_y \end{pmatrix}$$

     dépendant de l'angle géométrique du flux d'entraînement et de la vitesse angulaire du flux d'entraînement, avec les composantes de vecteur $F'''_x=f(\gamma_s,\omega_s)$ et $F'''_y=f(\gamma_s,\omega_s)$ et deuxièmement une force de commande pilote

$$\underline{F}'' = \begin{pmatrix} F''_x \\ F''_y \end{pmatrix}$$

dépendant de l'angle mécanique du rotor et de la vitesse angulaire du rotor avec les composantes de vecteur $F''_x=f(\gamma_m,\omega_m)$ et $F''_y=f(\gamma_m,\omega_m)$.

**4.** Procédé selon la revendication 2,

caractérisé en ce qu'

il est défini lors d'un fonctionnement de mesure pour les différents nombres de tours la force vibratoire agissant sur le rotor en fonction de l'angle mécanique du rotor par une technique de mesure ou par calcul à partir d'autres grandeurs comme la position du rotor et, après avoir fait la moyenne sur plusieurs périodes de l'angle mécanique du rotor, est stockée comme tableau de fonctionnement en fonction de la position du rotor et du nombre de tours,

qu'ensuite, au cours du fonctionnement, les valeurs du tableau de fonctionnement sont de nouveau sorties en fonction de l'angle mécanique du rotor et du nombre de tours mécanique, sont interpolées, en cas de besoin, entre deux valeurs de tableau et que la force ainsi obtenue, après un changement du signe, est ajoutée comme force de commande pilote

$$\underline{F}' = \begin{pmatrix} F'_x \\ F'_y \end{pmatrix}$$

avec les composantes de vecteur $F'_x=f(\gamma_m,\omega_m)$ et $F'_y=f(\gamma_m,\omega_m)$ à la valeur de consigne de force $\underline{F}^*$avec les composantes $F^*_x$ et $F^*_y$.

**5.** Procédé selon la revendication 3, caractérisé en ce qu'il est défini lors d'un fonctionnement de mesure pour différentes vitesses angulaires du flux d'entraînement la force vibratoire agissant sur le rotor en fonction de l'angle du flux d'entraînement par une technique de mesure ou par calcul à partir d'autres grandeurs, comme la position du rotor et que sa moyenne est faite sur un grand nombre de périodes de l'angle géométrique du flux d'entraînement et est stockée après un changement du signe comme tableau de fonctionnement en fonction de l'angle géométrique du flux d'entraînement et de la vitesse d'angle de flux d'entraînement comme force de commande pilote

$$\underline{F}''' = \begin{pmatrix} F'''_x \\ F'''_y \end{pmatrix}$$

avec les composantes de vecteur $F'''_x=f(\gamma_s,\omega_s)$ et $F'''_y=f(\gamma_s,\omega_s)$

en ce qu'il est déterminé lors du même fonctionnement de mesure pour différentes vitesses angulaires du rotor la force vibratoire agissant sur le rotor en fonction de l'angle du rotor par une technique de mesure ou par calcul à partir d'autres grandeurs, comme la position du rotor et que la moyenne de celle-ci est faite sur un très grand nombre de périodes de l'angle du rotor et stockée après un changement du signe comme tableau de fonctionnement en fonction de l'angle du rotor et de la vitesse annulaire du rotor comme force de commande pilote

$$\underline{F}'' = \begin{pmatrix} F''_x \\ F''_y \end{pmatrix}$$

avec les composantes de vecteur $F''_x = f(\gamma_m, \omega_m)$ et $F''_y = f(\gamma_m, \omega_m)$

- qu'ensuite, lors du fonctionnement, les valeurs du tableau de fonctionnement sont de nouveau extraites en-fonction de l'angle mécanique du rotor, de l'angle géométrique du flux d'entraînement, du nombre de tours mécanique et de la vitesse angulaire du flux d'entraînement, sont interpolées en cas de besoin entre deux valeurs de tableau, et les forces de commande pilote $\underline{F}'''$ et $\underline{F}''$ ainsi obtenues sont ajoutées à la valeur de consigne de force $\underline{F}''$.

**6.** Procédé selon la revendication 2, caractérisé en ce

- qu'il est superposé à la machine un régulateur de force transversale ou un régulateur de position avec une part d'intégrale,
- qu'on stocke lors d'un fonctionnement de mesure à une très petite vitesse angulaire de flux d'entraînement les signaux de régulateur pour une rotation ou en ayant établi la moyenne, sur plusieurs rotations sur l'angle du flux d'entraînement géométrique dans un tableau et qu'ensuite, en cours de fonctionnement, les valeurs de tableau sont extraites de nouveau en fonction de l'angle géométrique du flux d'entraînement et sont ajoutées comme force de commande pilote $\underline{F}'''$ à la valeur de consigne de force $\underline{F}^*$.

**7.** Procédé selon la revendication 1, caractérisé en ce que les forces vibratoires agissant sur le rotor d'une machine synchrone ou d'une machine à reluctance sont compensées en ajoutant au courant de commande

$$\underline{i}^{*\,(T,p2)}_{s2} = \begin{pmatrix} i^{*\,(T,p_2)}_{S_2d} \\ i^{*\,(T,p_2)}_{S_2q} \end{pmatrix}$$

défini dans le système de coordonnées (T) comme vecteur un courant de commande pilote

$$\underline{i}'^{\,(T,p2)}_{s2} = \begin{pmatrix} i'^{\,(T,p_2)}_{S_2d} \\ i'^{\,(T,p_2)}_{S_2q} \end{pmatrix}$$

dépendant de l'angle mécanique du rotor et de la vitesse angulaire du rotor avec les composantes de vecteur $i'^{\,(T,p2)}_{S2d} = f(\gamma_m, \omega_m)$, et $i'^{\,(T,p2)}_{S2q} = f(\gamma_m, \omega_m)$.

**8.** Procédé selon la revendication 1, caractérisé en ce que les forces vibratoires agissant sur le rotor d'une machine à induction sont compensées en ce qu'il est ajouté au courant de commande

$$\underline{i}^{*\,(T,p2)}_{s2} = \begin{pmatrix} i^{*\,(T,p_2)}_{S_2d} \\ i^{*\,(T,p_2)}_{S_2q} \end{pmatrix}$$

défini dans le système de coordonnées (T) comme vecteur

- premièrement un courant de commande pilote

$$\underline{i}''_{s2}{}^{(T,p2)} = \begin{pmatrix} i''_{S_2d}{}^{(T,p_2)} \\ i''_{S_2q}{}^{(T,p_2)} \end{pmatrix}$$

  dépendant de l'angle mécanique du rotor et de la vitesse angulaire du rotor avec les composantes de vecteur $i''_{S2d}{}^{(T,p2)} = f(\gamma_m,\omega_m)$ et $i''_{S2q}{}^{(T,p2)} = f(\gamma_m,\omega_m)$ pour compenser les forces vibratoires périodiques liées à l'angle mécanique du rotor, agissant sur le rotor et
- deuxièmement un courant de commande pilote

$$\underline{i}'''_{s2}{}^{(T,p2)} = \begin{pmatrix} i'''_{S_2d}{}^{(T,p_2)} \\ i'''_{S_2q}{}^{(T,p_2)} \end{pmatrix}$$

  dépendant de l'angle géométrique du flux d'entraînement et de la vitesse angulaire du flux d'entraînement avec les composantes de vecteur $i'''_{S2d}{}^{(T,p2)} = f(\gamma_s,\omega_s)$ et $i'''_{S2q}{}^{(T,p2)} = f(\gamma_s,\omega_s)$ afin de compenser des forces vibratoires périodiques, liées à l'angle géométrique du flux d'entraînement, agissant sur le rotor.

**9.** Procédé selon la revendication 7 ou 8, caractérisé en ce que les composantes de vecteur $i'_{S2d}{}^{(T,p2)} = f(\gamma_m,\omega_m)$ et $i'_{S2q}{}^{(T,p2)} = f(\gamma_m,\omega_m)$ du courant de commande pilote

$$\underline{i}'_{s2}{}^{(T,p2)} = \begin{pmatrix} i'_{S_2d}{}^{(T,p_2)} \\ i'_{S_2q}{}^{(T,p_2)} \end{pmatrix}$$

où les composantes de vecteur $i''_{S2d}{}^{(T,p2)} = f(\gamma_m,\omega_m)$, et $i''_{S2q}{}^{(T,p2)} = f(\gamma_m,\omega_m)$ du courant de commande pilote

$$\underline{i}''_{s2}{}^{(T,p2)} = \begin{pmatrix} i''_{S_2d}{}^{(T,p_2)} \\ i''_{S_2q}{}^{(T,p_2)} \end{pmatrix}$$

et les composantes de vecteur $i'''_{S2d}{}^{(T,p2)} = f(\gamma_s,\omega_s)$ et $i'''_{S2q}{}^{(T,p2)} = f(\gamma_s,\omega_s)$ du courant de commande pilote

$$\underline{i}'''_{s2}{}^{(T,p2)} = \begin{pmatrix} i'''_{S_2d}{}^{(T,p_2)} \\ i'''_{S_2q}{}^{(T,p_2)} \end{pmatrix}$$

sont stockées comme fonctions bidimensionnelles, représentées par des valeurs d'appui, sous forme de tableau

dans une mémoire à semi-conducteur et ensuite, pendant le temps d'exécution (pendant le fonctionnement), les courants de commande pilote $\underline{i}'_{S2}{}^{(T,p2)}$ ou $\underline{i}''_{S2}{}^{(T,p2)}$ et $\underline{i}'''_{S2}{}^{(T,p2)}$ sont extraits en fonction de l'angle géométrique du flux d'entraînement et de la vitesse angulaire du flux d'entraînement respectivement de l'angle mécanique du rotor et de la vitesse angulaire mécanique du rotor du tableau, où pour des valeurs de paramètre qui n'existent pas comme valeurs d'appui dans le tableau, il est procédé à une interpolation entre deux valeurs avoisinantes et sont ajoutées au courant de commande

$$\underline{i}^{*}{}_{s2}{}^{(T,p2)} = \begin{pmatrix} i^{*}{}_{S_2d}{}^{(T,p_2)} \\ i^{*}{}_{S_2q}{}^{(T,p_2)} \end{pmatrix}$$

défini dans le système de coordonnées (T) comme vecteur.

**10.** Procédé selon la revendication 7 à 9,
caractérisé en ce
qu'il est déterminée dans une machine synchrone et la machine à réluctance lors d'un fonctionnement de mesure pour les différents nombres de tours la force vibratoire agissant sur le rotor en fonction de l'angle mécanique du rotor par une technique de mesure ou par un clacul à partir d'autres grandeurs comme la position du rotor et est stockée, après avoir fait la moyenne sur plusieurs périodes de l'angle mécanique du rotor, comme tableau de fonctionnement en fonction de la position du rotor et du nombre de tours, et qu'on calcule ensuite à partir de celle-ci pendant le temps d'exécution (pendant le fonctionnement) le courant de commande pilote

$$\underline{i}'{}_{s2}{}^{(T,p2)} = \begin{pmatrix} i'{}_{S_2d}{}^{(T,p_2)} \\ i'{}_{S_2q}{}^{(T,p_2)} \end{pmatrix}$$

de façon qu'il génère une force de compensation opposée à la force vibratoire.

**11.** Procédé selon la revendication 7 à 9, caractérisé en ce

- qu'il est déterminée dans une machine à induction lors d'un fonctionnement de mesure pour différentes vitesses angulaires du flux d'entraînement la force vibratoire agissant sur le rotor en fonction de l'angle géométrique du flux d'entraînement par une technique de mesure ou par calcul à partir d'autres grandeurs comme la position du rotor et qu'il en est établie la moyenne sur un très grand nombre de périodes de l'angle du flux d'entraînement et qu'elle est stockée ensuite comme tableau de fonctionnement en fonction de l'angle géométrique du flux d'entraînement et de la vitesse angulaire du flux d'entraînement,

et qu'il est définie lors du même fonctionnement de mesure pour différentes vitesses angulaires du rotor la force vibratoire agissant sur le rotor en fonction de l'angle mécanique du rotor par une technique de mesure ou par calcul à partir d'autres grandeurs comme la position du rotor et qu'il en est fait la moyenne sur un très grand nombre de périodes de l'angle du rotor et qu'elle est stockée comme tableau de fonctionnement en fonction de l'angle du rotor et de la vitesse angulaire du rotor,

en ce qu'il est défini pendant le temps d'exécution (pendant le fonctionnement) à partir des deux tableaux de fonctionnement par une interpolation entre les valeurs d'appui et le changement de signe le courant de commande pilote

$$\underline{i}'''{}_{s2}{}^{(T,p2)} = \begin{pmatrix} i'''{}_{S_2d}{}^{(T,p_2)} \\ i'''{}_{S_2q}{}^{(T,p_2)} \end{pmatrix}$$

lié à l'angle de flux d'entraînement de façon qu'il génère une force de compensation opposée à la part de la force vibratoire liée au flux de machine et que le courant de commande pilote

$$\underline{i}''_{s2}{}^{(T,p2)} = \begin{pmatrix} i''_{S_2d}{}^{(T,p_2)} \\ i''_{S_2q}{}^{(T,p_2)} \end{pmatrix}$$

lié à l'angle mécanique du rotor est défini de façon qu'il génère une force de compensation opposée à la part de la force vibratoire (forces non équilibrées) liée à l'angle mécanique du rotor.

**12.** Procédé selon la revendication 7 à 11, caractérisé en ce que les mesures de correction indiquées ne sont pas exécutées dans le système de coordonnées (T) tournant suivant l'angle $\gamma_s^{(p1)}$ mais dans le système de coordonnées solidaires du stator (S).

**13.** Procédé selon l'une des revendications précédentes, caractérisé en ce que
lors de la détermination des signaux de commande pilote il est tenu compte de plus de la dépendance des forces vibratoires de la valeur du flux d'entraînement ($\psi$)·

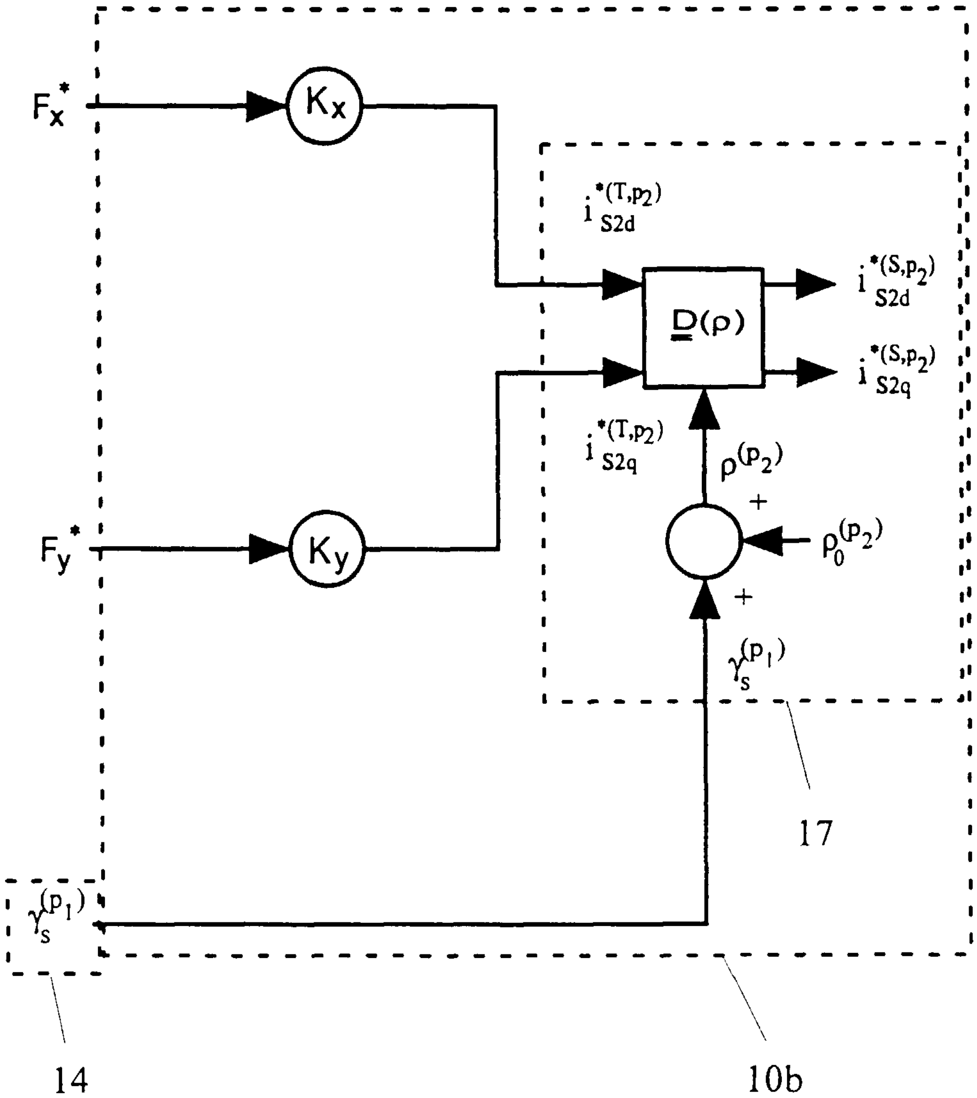

$F_x^*$
$K_x$
$F_y^*$
$K_y$
$i_{S2d}^{*(T,p_2)}$
$i_{S2q}^{*(T,p_2)}$
$\underline{D}(\rho)$
$i_{S2d}^{*(S,p_2)}$
$i_{S2q}^{*(S,p_2)}$
$\rho^{(p_2)}$
+
$\rho_0^{(p_2)}$
+
$\gamma_s^{(p_1)}$
17
$\gamma_s^{(p_1)}$
14
10b


Fig. 1

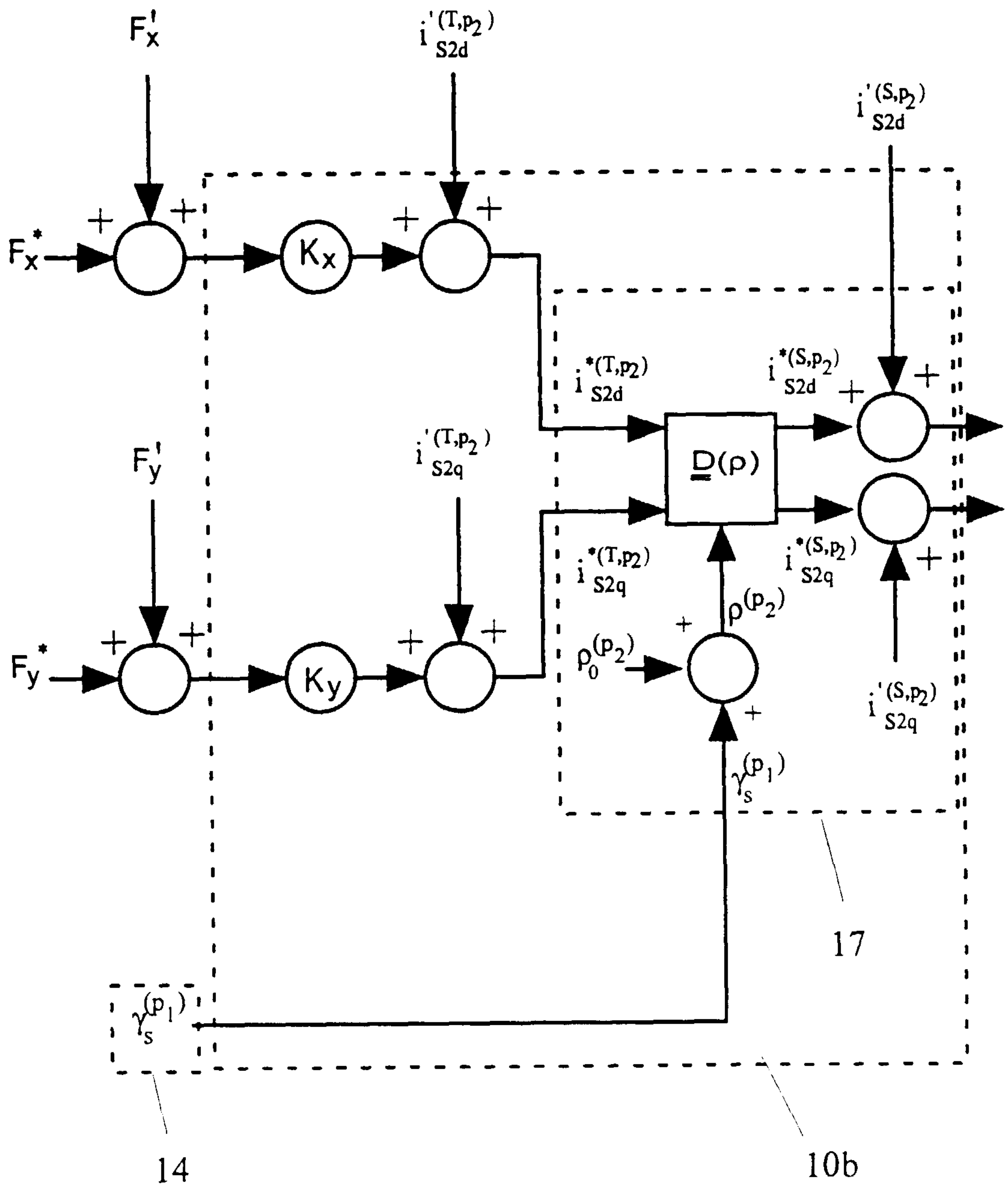

$F'_x$
$i'^{(T,p_2)}_{S2d}$
$i'^{(S,p_2)}_{S2d}$
$F^*_x$
$K_x$
$i^{*(T,p_2)}_{S2d}$
$i^{*(S,p_2)}_{S2d}$
$\underline{D}(\rho)$
$F'_y$
$i'^{(T,p_2)}_{S2q}$
$i^{*(T,p_2)}_{S2q}$
$i^{*(S,p_2)}_{S2q}$
$\rho^{(p_2)}$
$F^*_y$
$K_y$
$\rho_0^{(p_2)}$
$i'^{(S,p_2)}_{S2q}$
$\gamma_s^{(p_1)}$
17
$\gamma_s^{(p_1)}$
14
10b


Fig. 2

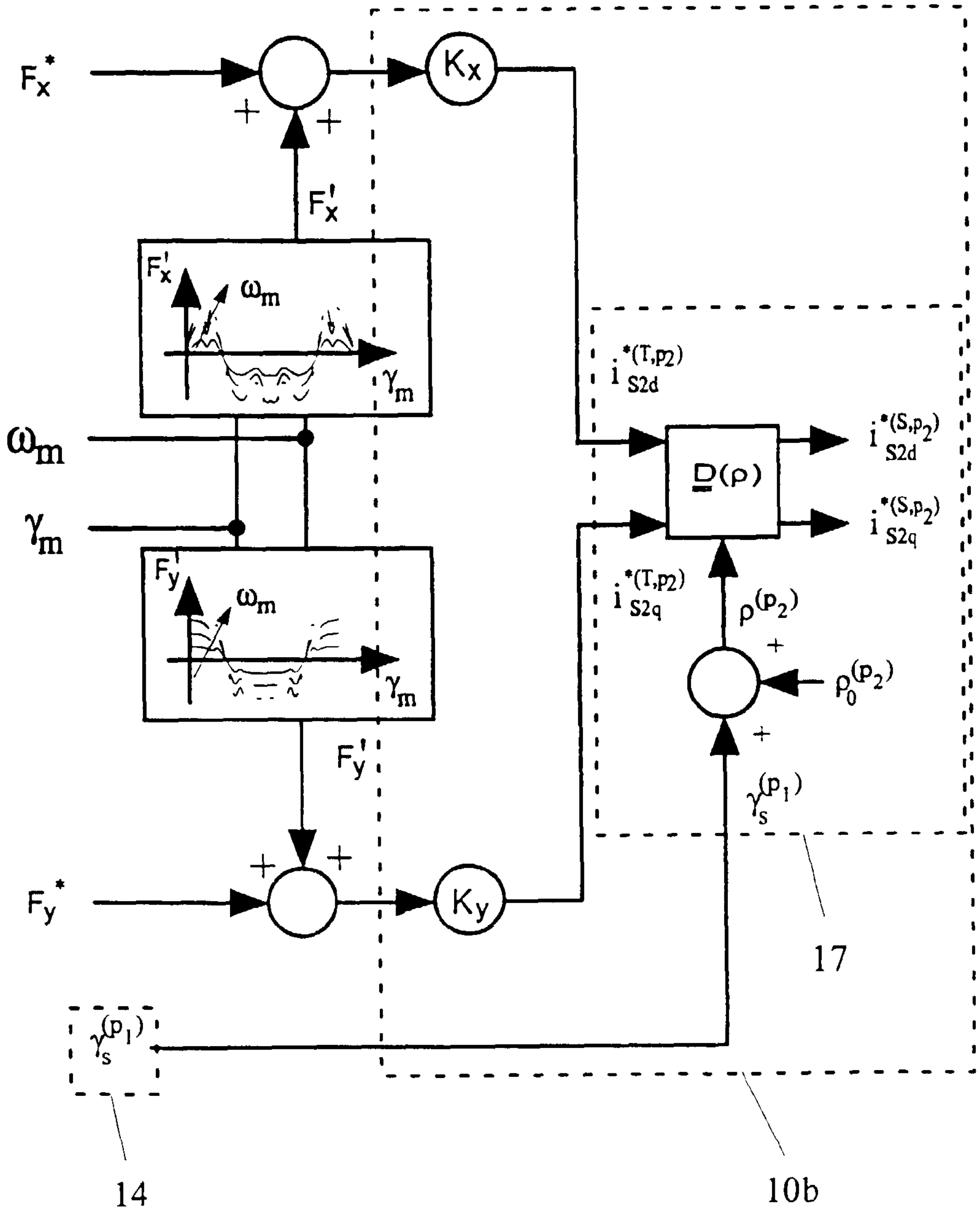
$F_x^*$
+
+
$F_x'$
$F_x'$
$\omega_m$
$\gamma_m$
$K_x$
$\omega_m$
$\gamma_m$
$F_y'$
$\omega_m$
$\gamma_m$
$F_y'$
+
+
$F_y^*$
$K_y$
$i_{S2d}^{*(T,p2)}$
$i_{S2q}^{*(T,p2)}$
$\underline{D}(\rho)$
$i_{S2d}^{*(S,p_2)}$
$i_{S2q}^{*(S,p_2)}$
$\rho^{(p_2)}$
+
$\rho_0^{(p_2)}$
+
$\gamma_s^{(p_1)}$
17
$\gamma_s^{(p_1)}$
14
10b

Fig. 3

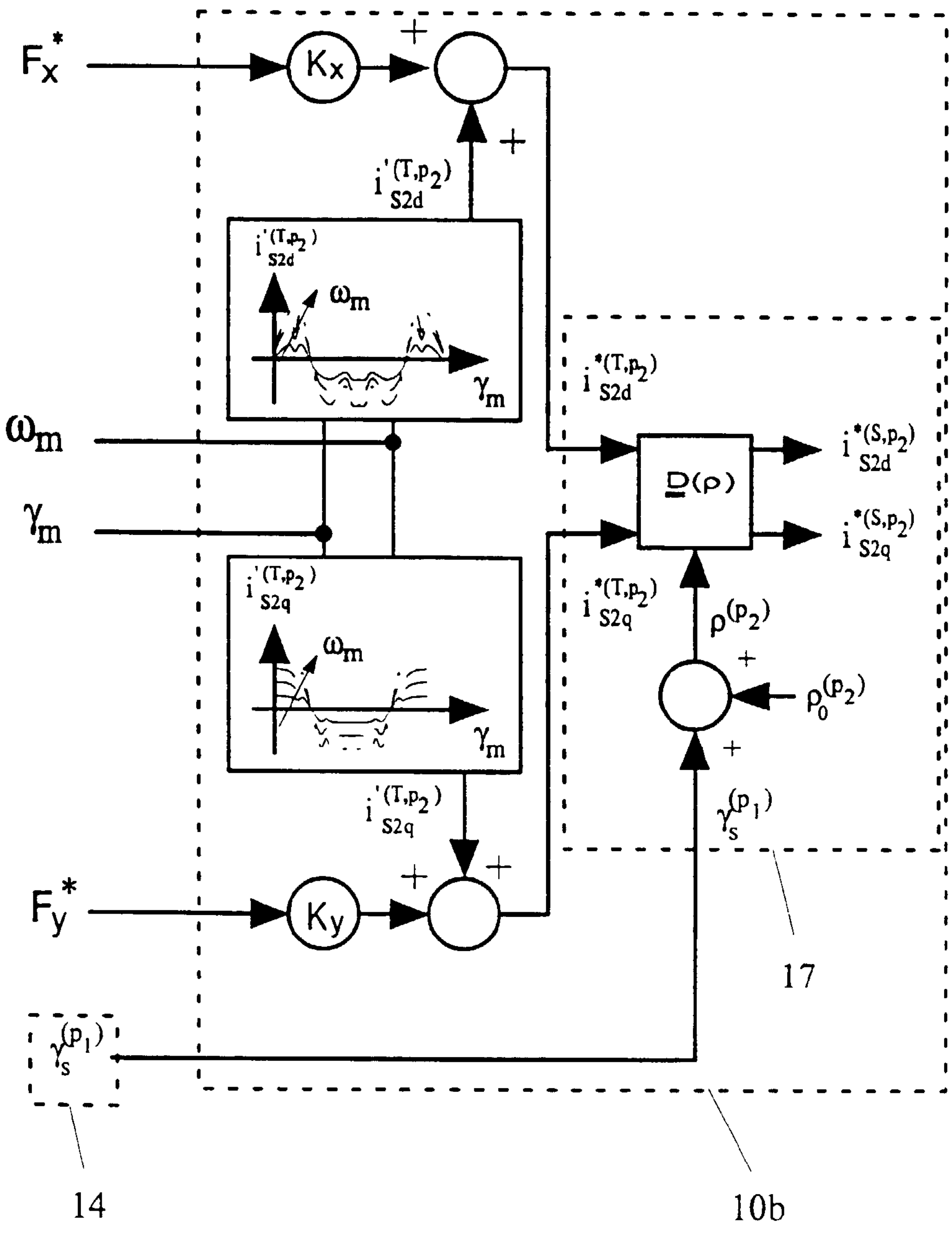

$F_x^*$
$K_x$
+
+
$i'^{(T,p_2)}_{S2d}$
$\omega_m$
$\gamma_m$
$i^{*(T,p_2)}_{S2d}$
$\underline{D}(\rho)$
$i^{*(S,p_2)}_{S2d}$
$i^{*(S,p_2)}_{S2q}$
$i^{*(T,p_2)}_{S2q}$
$\rho^{(p_2)}$
$\rho_0^{(p_2)}$
$i'^{(T,p_2)}_{S2q}$
$\gamma_s^{(p_1)}$
$F_y^*$
$K_y$
17
14
10b


Fig. 4

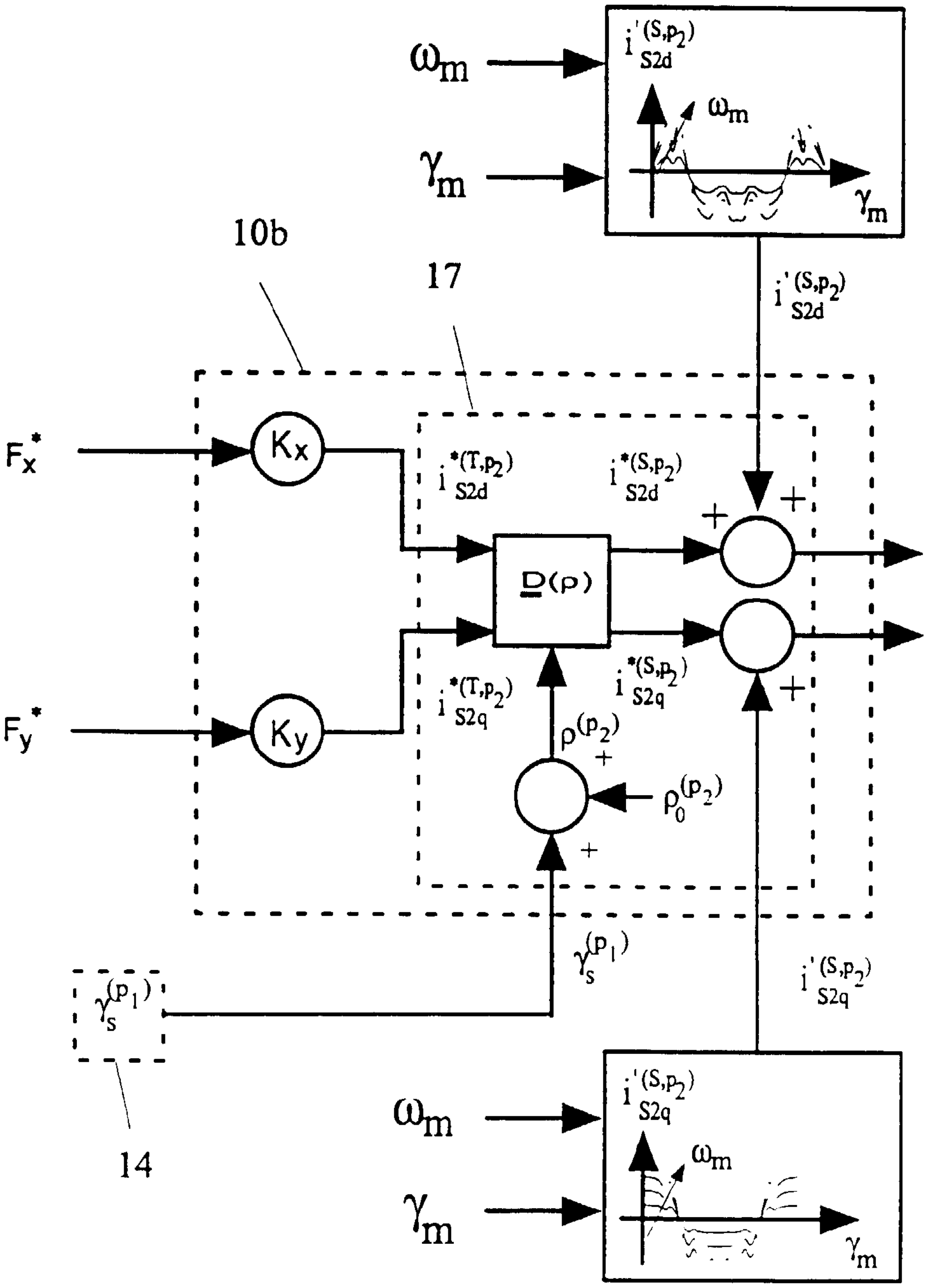

$\omega_m$
$\gamma_m$
$i'^{(S,p_2)}_{S2d}$
$\omega_m$
$\gamma_m$
10b
17
$i'^{(S,p_2)}_{S2d}$
$F_x^*$
Kx
$i^{*(T,p_2)}_{S2d}$
$i^{*(S,p_2)}_{S2d}$
+
+
D(p)
$i^{*(S,p_2)}_{S2q}$
$i^{*(T,p_2)}_{S2q}$
+
$F_y^*$
Ky
$\rho^{(p_2)}$
+
$\rho_0^{(p_2)}$
+
$\gamma_s^{(p_1)}$
$i'^{(S,p_2)}_{S2q}$
$\gamma_s^{(p_1)}$
14
$\omega_m$
$\gamma_m$
$i'^{(S,p_2)}_{S2q}$
$\omega_m$
$\gamma_m$


Fig. 5

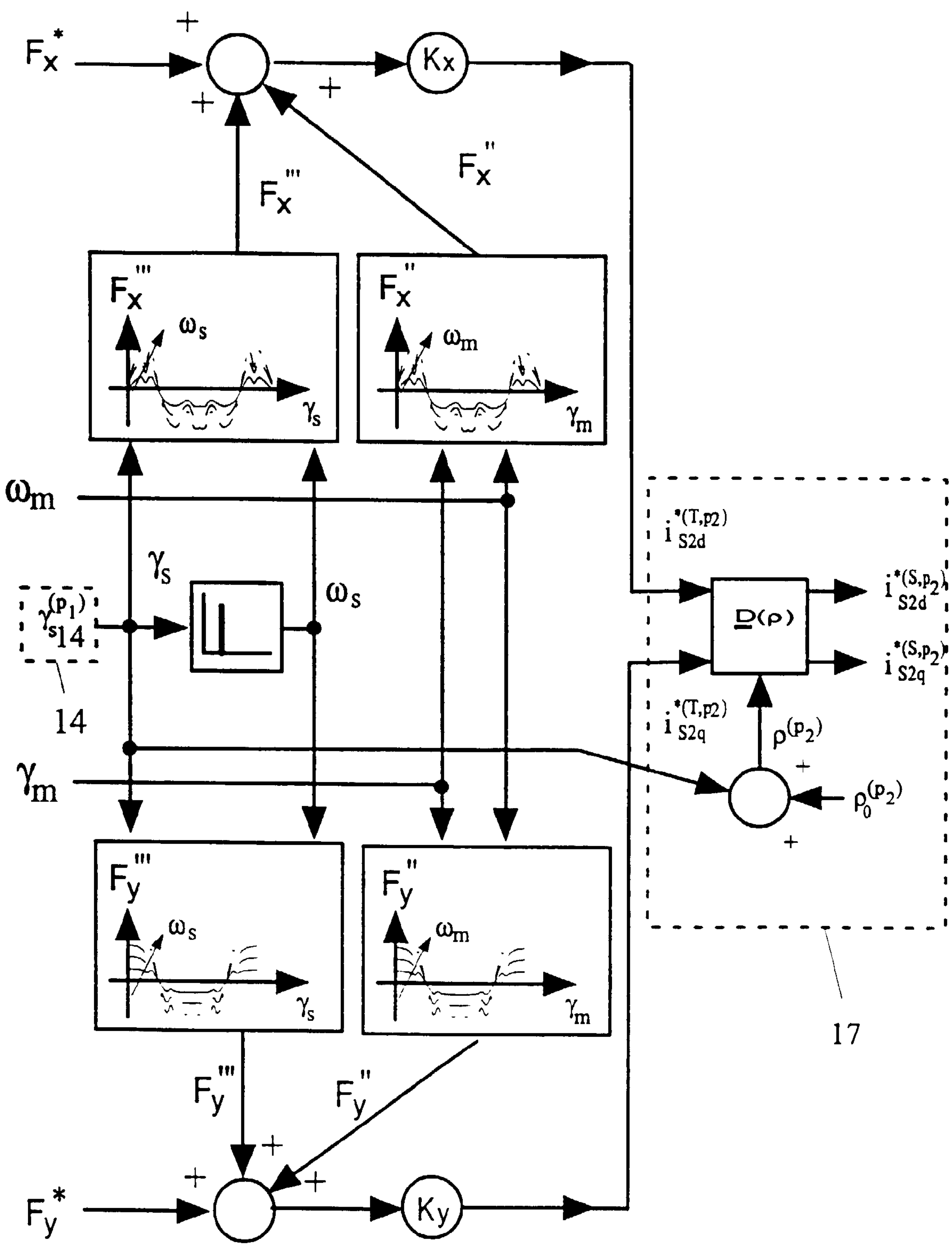

$F_x^*$
+
+
+
Kx
$F_x'''$
$F_x''$
$F_x'''$
$\omega_s$
$\gamma_s$
$F_x''$
$\omega_m$
$\gamma_m$
$\omega_m$
$\gamma_s$
$\gamma_s^{(p_1)}$
14
$\omega_s$
14
$\gamma_m$
$i^{*(T,p2)}_{S2d}$
$\underline{D}(\rho)$
$i^{*(S,p_2)}_{S2d}$
$i^{*(S,p_2)}_{S2q}$
$i^{*(T,p2)}_{S2q}$
$\rho^{(p_2)}$
+
$\rho_0^{(p_2)}$
+
$F_y'''$
$\omega_s$
$\gamma_s$
$F_y''$
$\omega_m$
$\gamma_m$
17
$F_y'''$
$F_y''$
+
+
+
$F_y^*$
Ky


Fig.6

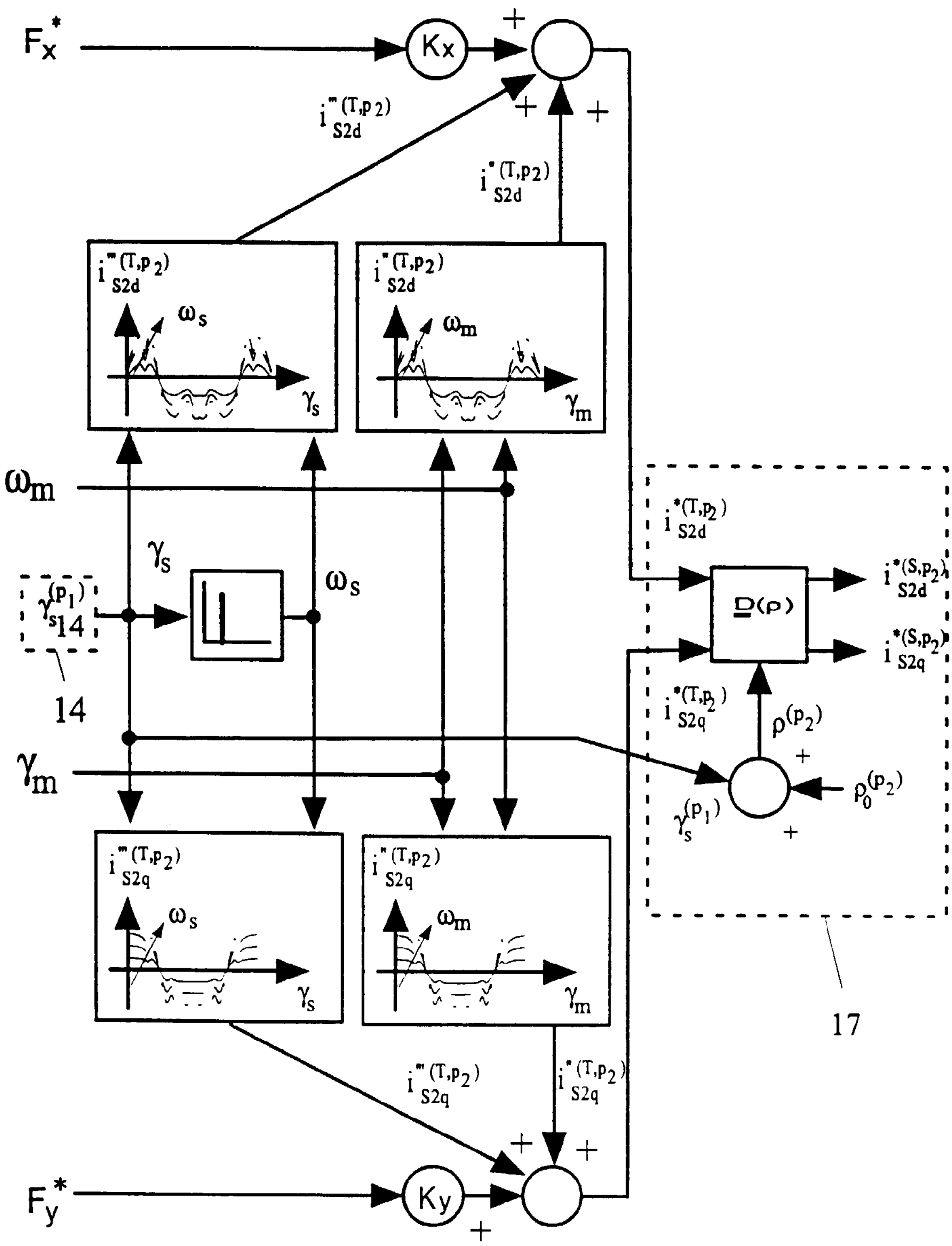


Fig.7

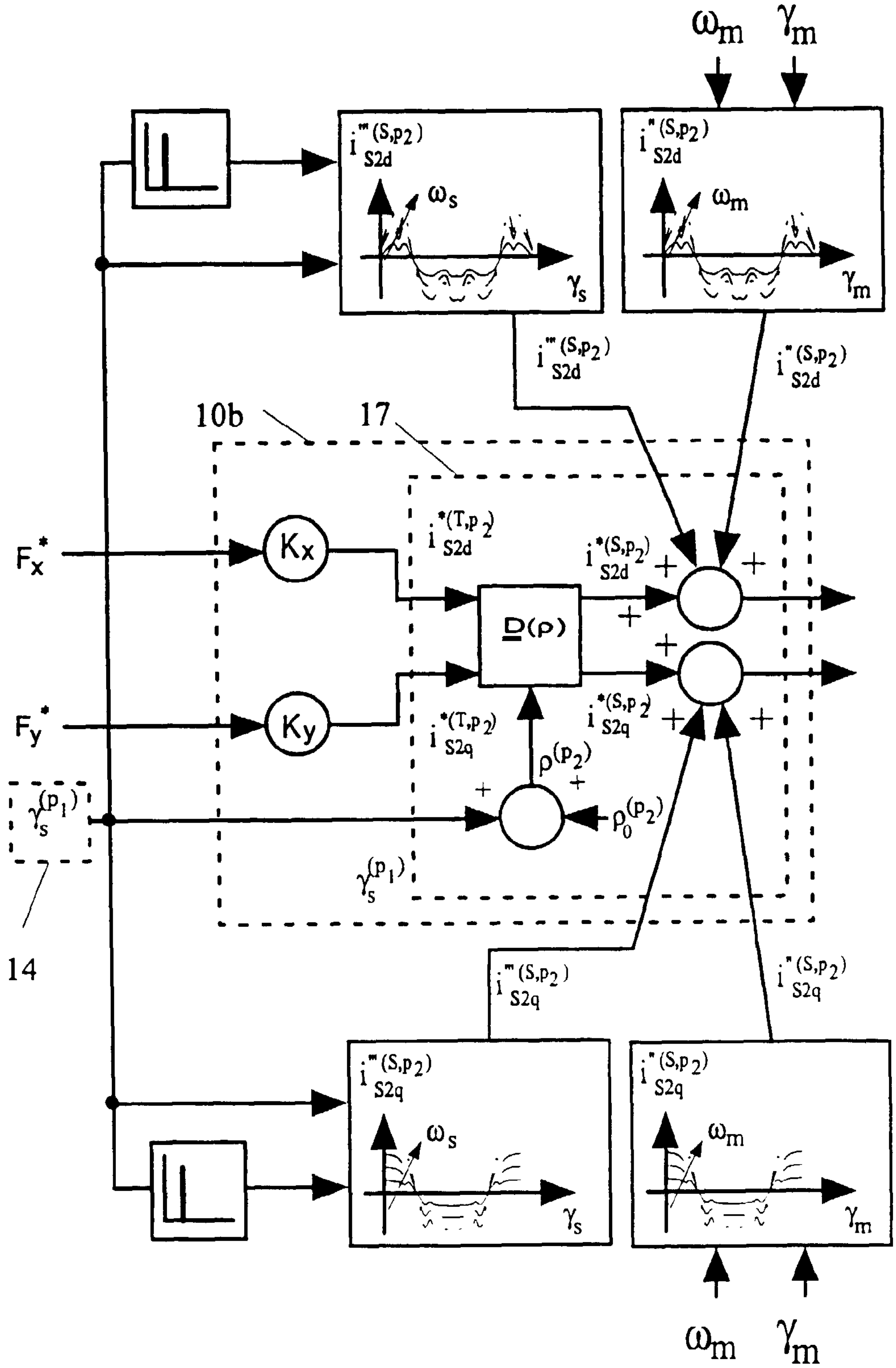


Fig. 8